# EUROPEAN PATENT APPLICATION

(11) **EP 4 597 295 A1**
(43) Date of publication of application: **06.08.2025**
(21) Application number: 23873060.0
(22) Date of filing: 26.09.2023
(51) Int. Cl.: G06F 3/14, B60R 16/023, B60K 35/00, H04L 61/5007, B60W 50/023, B60W 50/02, B60W 50/04

(54) **SIGNAL PROCESSING DEVICE, AND DISPLAY DEVICE FOR VEHICLE, COMPRISING SAME**

(30) Priority: 27.09.2022 KR 20220122192; 07.06.2023 KR 20230072877
(71) Applicant: LG Electronics Inc., Yeongdeungpo-gu Seoul 07336 (KR)
(72) Inventor: LEE, Chulhee, Seoul 06772 (KR); PARK, Namyong, Seoul 06772 (KR); LEE, Dongkyu, Seoul 06772 (KR); YOON, Taesuk, Seoul 06772 (KR); JEONG, Sangkyeong, Seoul 06772 (KR)
(74) Representative: Vossius & Partner Patentanwälte Rechtsanwälte mbB
(86) International application number: PCT/KR2023/014737
(87) International publication number: WO 2024/071945

(57) **Abstract**

A signal processing device according to an embodiment of the present disclosure includes a processor configured to control at least one display connected to a network port, wherein the processor is configured to transmit data related to graphic image or image data to the display. Accordingly, an image is stably displayed on a network display.

## Description

### BACKGROUND

### 1. Technical Field

The present disclosure relates to a signal processing device and a vehicle display apparatus having the same, and more specifically, to a signal processing device capable of stably displaying an image on a network display and a vehicle display apparatus having the same.

### 2. Description of the Related Art

A vehicle is a machine that allows a user to move in a desired direction. A typical example of the vehicle is an automobile.

Meanwhile, a signal processing device for vehicles is mounted in the vehicle for convenience of users who use the vehicle.

Meanwhile, for passengers inside a vehicle, the number of displays placed inside the vehicle is increasing.

Furthermore, the tendency to additionally install displays inside a vehicle is increasing.

When the number of displays placed inside a vehicle increases or additional displays are installed, signal processing load of a signal processing device increases, and furthermore, when transmitting image signals based on the SerDes, there are disadvantages such as unstable image signal transmission, etc.

### SUMMARY

It is an objective of the present disclosure to provide a signal processing device capable of stably displaying an image on a network display and a vehicle display apparatus having the same.

It is another objective of the present disclosure to provide a signal processing device capable of stably displaying an image when a display is added and a vehicle display apparatus having the same.

In accordance with an aspect of the present disclosure, the above and other objectives can be accomplished by providing a signal processing device and a vehicle display apparatus having the same, including a processor configured to control at least one display connected to a network port, wherein the processor is configured to transmit data related to graphic image or image data to the display.

The processor can be configured to transmit the data related to graphic image to the display in response to transmission of the data related to graphic image being possible, and transmit the image data to the display in response to transmission of the data related to graphic image being impossible.

The processor can include a gateway manager configured to perform network management for the display connected to a network, and a window manager configured to manage settings for images displayed on the display.

The processor can be configured to transmit the data related to graphic image or the image data to the display through Ethernet communication.

The processor can be configured to execute a plurality of virtual machines on a hypervisor, wherein a first virtual machine among the plurality of virtual machines can be configured to transmit the data related to graphic image or the image data to the display.

The first virtual machine can be configured to execute a gateway manager configured to perform network management for the display connected to the network, and a window manager configured to manage settings for images displayed on the display.

The first virtual machine can be configured to transmit the data related to graphic image or the image data to a plurality of displays in response to the plurality of displays being connected to the network.

The first virtual machine can be configured to output second image data to a cluster display connected to a display port.

A second virtual machine among the plurality of virtual machines can be configured to transmit image source data to the first virtual machine, and the first virtual machine can be configured to transmit the data related to graphic image or the image data based on the image source data to the display.

The first virtual machine can be configured to receive information on a second display additionally connected to the network, and transmit the data related to graphic image or the image data to the second display.

In response to the display and the second display having different resolutions, the first virtual machine can be configured to differentiate sizes or resolutions of the data related to graphic image or the image data transmitted to the display and the second display.

The data related to graphic image can include graphic variable data and drawing command data.

The transmitted graphic variable data can include address information data in a memory of the signal processing device indicated by pointer data.

The first virtual machine can be configured to synchronize a memory corresponding to the processor and a memory corresponding to the display in response to the graphic variable data including pointer data.

The first virtual machine can be configured to transmit differential data of previous data and current data stored in the memory corresponding to the processor to the memory corresponding to the display.

In response to a first address area in a memory indicated by first pointer data overlapping at least partly with a second address area in a previously synchronized memory indicated second pointer data during the memory synchronization, the first virtual machine can be configured to generate third pointer data corresponding to a third address area including the overlapping area, the first address area, and the second address area, and transmit data related to graphic image including the generated third pointer data.

The first virtual machine can be configured to transmit data related to graphic image or image data to the display connected to a zonal signal processing device.

A signal processing device and a vehicle display apparatus having the same according to another embodiment of the present disclosure include a processor configured to control at least one display connected to a network port, wherein the processor is configured to transmit data related to graphic image or image data to the display and output second image data to a cluster display connected to a display port.

### EFFECTS OF THE DISCLOSURE

A signal processing device and a vehicle display apparatus having the same according to an embodiment of the present disclosure include a processor configured to control at least one display connected to a network port, wherein the processor is configured to transmit data related to graphic image or image data to the display. Accordingly, it is possible to display an image stably on a network display.

The processor can be configured to transmit the data related to graphic image to the display in response to transmission of the data related to graphic image being possible, and transmit the image data to the display in response to transmission of the data related to graphic image being impossible. Accordingly, it is possible to display an image stably on a network display.

The processor can include a gateway manager configured to perform network management for the display connected to a network, and a window manager configured to manage settings for images displayed on the display. Accordingly, it is possible to display an image stably on a network display.

The processor can be configured to transmit the data related to graphic image or the image data to the display through Ethernet communication. Accordingly, it is possible to display an image stably on a network display.

The processor can be configured to execute a plurality of virtual machines on a hypervisor, wherein a first virtual machine among the plurality of virtual machines can be configured to transmit the data related to graphic image or the image data to the display. Accordingly, it is possible to display an image stably on a network display.

The first virtual machine can be configured to execute a gateway manager configured to perform network management for the display connected to the network, and a window manager configured to manage settings for images displayed on the display. Accordingly, it is possible to display an image stably on a network display.

The first virtual machine can be configured to transmit the data related to graphic image or the image data to a plurality of displays in response to the plurality of displays being connected to the network. Accordingly, it is possible to display an image stably on a network display. In particular, an image can be stably displayed when a display is added.

The first virtual machine can be configured to output second image data to a cluster display connected to a display port. Accordingly, it is possible to display an image stably on the cluster display connected to the display port.

A second virtual machine among the plurality of virtual machines can be configured to transmit image source data to the first virtual machine, and the first virtual machine can be configured to transmit the data related to graphic image or the image data based on the image source data to the display. Accordingly, it is possible to display an image stably on a network display.

The first virtual machine can be configured to receive information on a second display additionally connected to the network, and transmit the data related to graphic image or the image data to the second display. Accordingly, an image can also be stably displayed when a display is added.

In response to the display and the second display having different resolutions, the first virtual machine can be configured to differentiate sizes or resolutions of the data related to graphic image or the image data transmitted to the display and the second display. Accordingly, it is possible to display an image stably on a network display.

The data related to graphic image can include graphic variable data and drawing command data. Accordingly, it is possible to display an image stably on a network display.

The transmitted graphic variable data can include address information data in a memory of the signal processing device indicated by pointer data. Accordingly, it is possible to display an image stably on a network display.

The first virtual machine can be configured to synchronize a memory corresponding to the processor and a memory corresponding to the display in response to the graphic variable data including pointer data. Accordingly, it is possible to display an image stably on a network display.

The first virtual machine can be configured to transmit differential data of previous data and current data stored in the memory corresponding to the processor to the memory corresponding to the display. Accordingly, it is possible to display an image stably on a network display.

In response to a first address area in a memory indicated by first pointer data overlapping at least partly with a second address area in a previously synchronized memory indicated second pointer data during the memory synchronization, the first virtual machine can be configured to generate third pointer data corresponding to a third address area including the overlapping area, the first address area, and the second address area, and transmit data related to graphic image including the generated third pointer data. Accordingly, it is possible to display an image stably on a network display.

The first virtual machine can be configured to transmit data related to graphic image or image data to the display connected to a zonal signal processing device. Accordingly, it is possible to display an image stably on a network display.

A signal processing device and a vehicle display apparatus having the same according to another embodiment of the present disclosure include a processor configured to control at least one display connected to a network port, wherein the processor is configured to transmit data related to graphic image or image data to the display and output second image data to a cluster display connected to a display port. Accordingly, images can be stably displayed on the network display and the cluster display connected to the display port, respectively.

### BRIEF DESCRIPTION OF THE DRAWINGS

FIG. 1 is a diagram illustrating an example of the exterior and interior of a vehicle;
FIGS. 2A to 2C are diagrams illustrating various architectures of a vehicle communication gateway;
FIG. 3A is a diagram illustrating an example of a vehicle display apparatus in a vehicle;
FIG. 3B is a diagram illustrating another example of a vehicle display apparatus in a vehicle;
FIG. 4 is an internal block diagram illustrating an example of the vehicle display apparatus of FIG. 3B;
FIGS. 5A to 5D are diagrams illustrating various examples of a vehicle display apparatus;
FIG. 6 is a block diagram illustrating an example of a vehicle display apparatus according to an embodiment of the present disclosure;
FIGS. 7A and 7B are diagrams referred to in the description of a signal processing device related to the present disclosure;
FIG. 8A illustrates an example of a signal processing device according to an embodiment of the present disclosure;
FIG. 8B illustrates another example of a signal processing device according to an embodiment of the present disclosure;
FIG. 9 is a block diagram of another example of a vehicle display apparatus according to an embodiment of the present disclosure;
FIGS. 10A to 11 are diagrams referred to in the description of FIG. 9;
FIG. 12 is a flowchart illustrating an operation method of a vehicle display apparatus according to an embodiment of the present disclosure;
FIGS. 13A to 16E are diagrams referred to in the description of the operation in FIG. 9 or FIG. 12;
FIG. 17 is a block diagram illustrating an example of a data transmission device and a data reception device for transmitting data related to graphic image according to an embodiment of the present disclosure;
FIG. 18A is a flowchart illustrating an operation method of the data transmission device according to an embodiment of the present disclosure; and
FIGS. 18B to 20D are diagrams referred to describe various examples of the operation method of the data transmission device of FIG. 18A.

### DETAILED DESCRIPTION

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" can be used interchangeably.

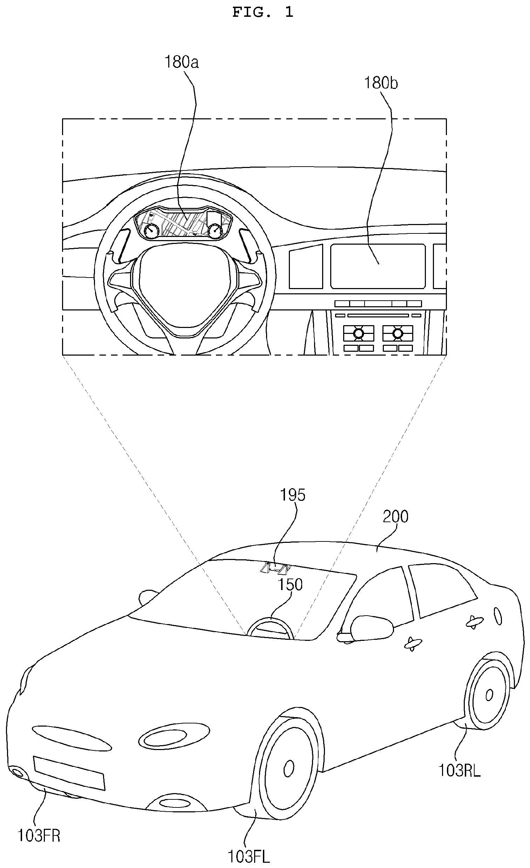

FIG. 1 is a diagram illustrating an example of the exterior and interior of a vehicle.

Referring to the drawing, the vehicle 200 is moved by a plurality of wheels 103FR, 103FL, 103RL, ... rotated by a power source and a steering wheel 150 configured to adjust an advancing direction of the vehicle 200.

Meanwhile, the vehicle 200 can be provided with a camera 195 configured to acquire an image of the front of the vehicle.

Meanwhile, the vehicle 200 can be further provided therein with a plurality of displays 180a and 180b configured to display images and information.

In FIG. 1, a cluster display 180a and an audio video navigation (AVN) display 180b are illustrated as the plurality of displays 180a and 180b. In addition, a head up display (HUD) can also be used.

Meanwhile, the audio video navigation (AVN) display 180b can also be called a center information display.

Meanwhile, the vehicle 200 described in this specification can be a concept including all of a vehicle having an engine as a power source, a hybrid vehicle having an engine and an electric motor as a power source, and an electric vehicle having an electric motor as a power source.

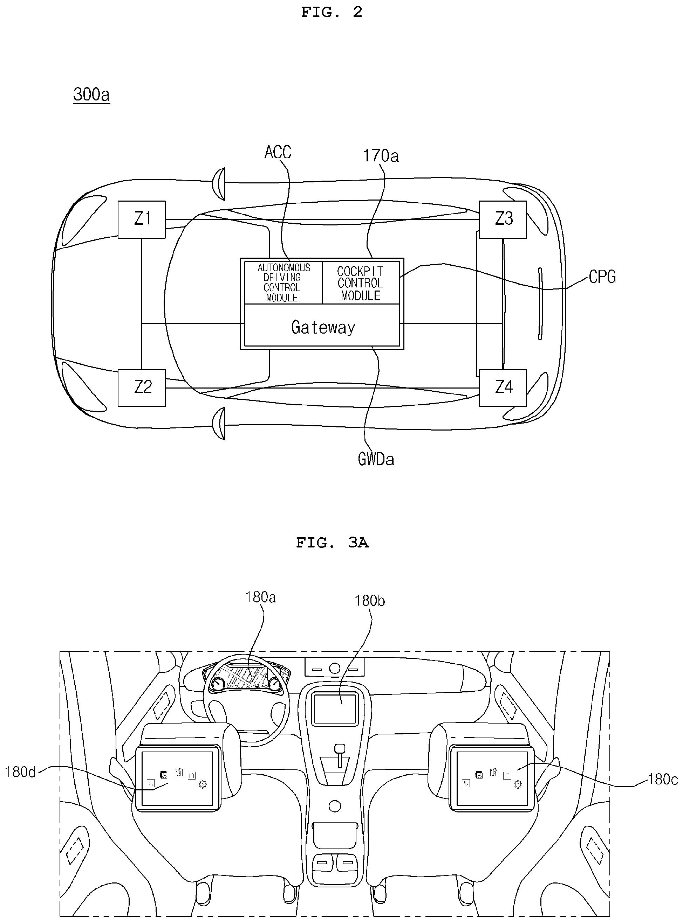

FIGS. 2 to 2C are diagrams illustrating various architectures of a vehicle communication gateway.

First, FIG. 2 is a diagram illustrating a first architecture of a vehicle communication gateway.

Referring to FIG. 2, a first architecture 300a can correspond to a zone-based architecture.

Accordingly, vehicle internal sensor devices and processors can be mounted in each of a plurality of zones Z1 to Z4, and a signal processing device 170a including a vehicle communication gateway GWDa can be disposed at the center of the plurality of zones Z1 to Z4.

Meanwhile, the signal processing device 170a can further include an autonomous driving control module ACC, a cockpit control module CPG, etc., in addition to the vehicle communication gateway GWDa.

The vehicle communication gateway GWDa in the signal processing device 170a can be a High Performance Computing (HPC) gateway.

That is, as an integrated HPC gateway, the signal processing device 170a of FIG. 2 can exchange data with an external communication module (not shown) or processors (not shown) in the plurality of zones Z1 to Z4.

FIG. 3A is a diagram illustrating an example of a vehicle display apparatus in a vehicle.

Referring to the drawing, a cluster display 180a, an audio video navigation (AVN) display 180b, rear seat entertainment displays 180c and 180d, and a rear-view mirror display (not shown) can be mounted in the vehicle.

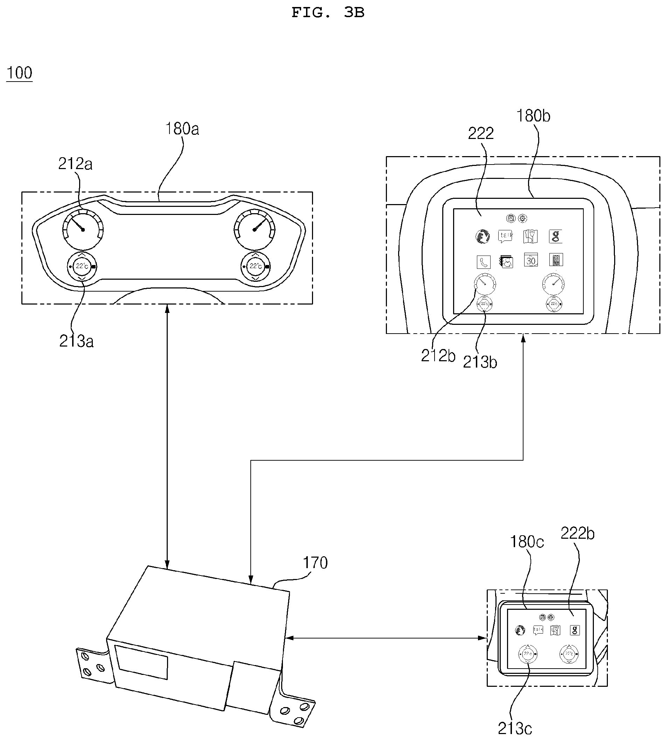

FIG. 3B is a diagram illustrating another example of a vehicle display apparatus in a vehicle.

A vehicle display apparatus 100 according to the embodiment of the present disclosure can include a plurality of displays 180a and 180b and a signal processing device 170 configured to perform signal processing in order to display images and information on the plurality of displays 180a and 180b, and to output an image signal to at least one of the displays 180a and 180b.

The first display 180a, which is one of the plurality of displays 180a and 180b, can be a cluster display 180a configured to display a driving state and operation information, and the second display 180b can be an audio video navigation (AVN) display 180b configured to display vehicle driving information, a navigation map, various kinds of entertainment information, or an image.

The signal processing device 170 can have a processor 175 provided therein, and first to third virtual machines (not shown) can be executed by a hypervisor 505 in the processor 175.

The second virtual machine (not shown) can be operated for the first display 180a, and the third virtual machine (not shown) can be operated for the second display 180b.

Meanwhile, the first virtual machine (not shown) in the processor 175 can be configured to set a shared memory 508 based on the hypervisor 505 for transmission of the same data to the second virtual machine (not shown) and the third virtual machine (not shown). Consequently, the first display 180a and the second display 180b in the vehicle can display the same information or the same images in a synchronized state.

Meanwhile, the first virtual machine (not shown) in the processor 175 shares at least some of data with the second virtual machine (not shown) and the third virtual machine (not shown) for divided processing of data. Consequently, the plurality of virtual machines for the plurality of displays in the vehicle can divide and process data.

Meanwhile, the first virtual machine (not shown) in the processor 175 can receive and process wheel speed sensor data of the vehicle, and can transmit the processed wheel speed sensor data to at least one of the second virtual machine (not shown) or the third virtual machine (not shown). Consequently, at least one virtual machine can share the wheel speed sensor data of the vehicle.

Meanwhile, the vehicle display apparatus 100 according to the embodiment of the present disclosure can further include a rear seat entertainment (RSE) display 180c configured to display driving state information, simple navigation information, various kinds of entertainment information, or an image.

The signal processing device 170 can further execute a fourth virtual machine (not shown), in addition to the first to third virtual machines (not shown), on the hypervisor 505 in the processor 175 to control the RSE display 180c.

Consequently, it is possible to control various displays 180a to 180c using a single signal processing device 170.

Meanwhile, some of the plurality of displays 180a to 180c can be operated based on a Linux Operating System (OS), and others can be operated based on a Web Operating System (OS).

The signal processing device 170 according to the embodiment of the present disclosure can be configured to display the same information or the same images in a synchronized state on the displays 180a to 180c to be operated under various operating systems.

Meanwhile, FIG. 3B illustrates an example in which a vehicle speed indicator 212a and a vehicle internal temperature indicator 213a are displayed on a first display 180a, a home screen 222 including a plurality of applications, a vehicle speed indicator 212b, and a vehicle internal temperature indicator 213b is displayed on a second display 180b, and a second home screen 222b including a plurality of applications and a vehicle internal temperature indicator 213c is displayed on a third display 180c.

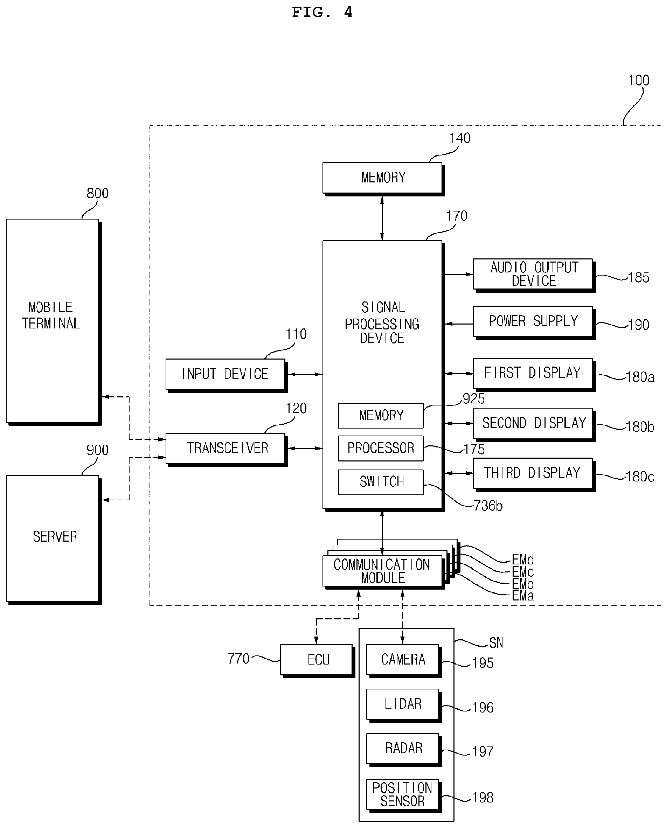

FIG. 4 is an internal block diagram illustrating an example of the vehicle display apparatus of FIG. 3B.

Referring to FIG. 4, a vehicle display apparatus 100 according to an embodiment of the present disclosure can include an input device 110, a transceiver 120 for communication with an external device, a plurality of communication modules EMa to EMd for internal communication, a memory 140, the signal processing device 170, a plurality of displays 180a to 180c, an audio output device 185, and a power supply 190.

The plurality of communication modules EMa to EMd can be disposed in a plurality of zones Z1 to Z4, respectively, in FIG. 2.

Meanwhile, the signal processing device 170 can be provided therein with a communication switch 736b for data communication with the respective communication modules EM1 to EM4.

The respective communication modules EM1 to EM4 can perform data communication with the plurality of sensor devices SN or the ECU 770.

Meanwhile, a plurality of sensor devices SN can include a camera 195, a lidar sensor 196, a radar sensor 197, or a position sensor 198.

The input device 110 can include a physical button or pad for button input or touch input.

Meanwhile, the input device 110 can include a microphone (not shown) for user voice input.

The transceiver 120 can wirelessly exchange data with a mobile terminal 800 or a server 900.

In particular, the transceiver 120 can wirelessly exchange data with a mobile terminal of a vehicle driver. Any of various data communication schemes, such as Bluetooth, Wi-Fi, WIFI Direct, and APIX, can be used as a wireless data communication scheme.

The transceiver 120 can receive weather information and road traffic state information, such as Transport Protocol Experts Group (TPEG) information, from a mobile terminal 800 or a server 900. To this end, the transceiver 120 can include a mobile communication module (not shown).

The plurality of communication modules EM1 to EM4 can receive sensor data and the like from the electronic control unit (ECU) 770 or the sensor device SN or a zonal signal processing device 170Z, and can transmit the received sensor data to the signal processing device 170.

Here, the sensor data can include at least one of vehicle direction data, vehicle position data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data, or vehicle internal humidity data.

The sensor data can be acquired from a heading sensor, a yaw sensor, a gyro sensor, a position sensor, a vehicle forward/backward movement sensor, a wheel sensor, a vehicle speed sensor, a car body inclination sensor, a battery sensor, a fuel sensor, a tire sensor, a steering-wheel-rotation-based steering sensor, a vehicle internal temperature sensor, or a vehicle internal humidity sensor.

Meanwhile, the position module can include a GPS module configured to receive GPS information or a position sensor 198.

Meanwhile, at least one of the plurality of communication modules EM1 to EM4 can transmit position information data sensed by the GPS module or the position sensor 198 to the signal processing device 170.

Meanwhile, at least one of the plurality of communication modules EM1 to EM4 can receive front image data of the vehicle, side-of-vehicle image data, rear image data of the vehicle, and obstacle-around-vehicle distance information from the camera 195, the lidar sensor 196, or the radar sensor 197, etc., and can transmit the received information to the signal processing device 170.

The memory 140 can store various data necessary for overall operation of the vehicle display apparatus 100, such as programs for processing or control of the signal processing device 170.

For example, the memory 140 can store data about the hypervisor and first to third virtual machines executed by the hypervisor in the processor 175.

The audio output device 185 can convert an electrical signal from the signal processing device 170 into an audio signal, and can output the audio signal. To this end, the audio output device 185 can include a speaker.

The power supply 190 can supply power necessary to operate components under control of the signal processing device 170. In particular, the power supply 190 can receive power from a battery in the vehicle.

The signal processing device 170 can control the overall operation of each device in the vehicle display apparatus 100.

For example, the signal processing device 170 can include a processor 175 configured to perform signal processing for the vehicle displays 180a and 180b.

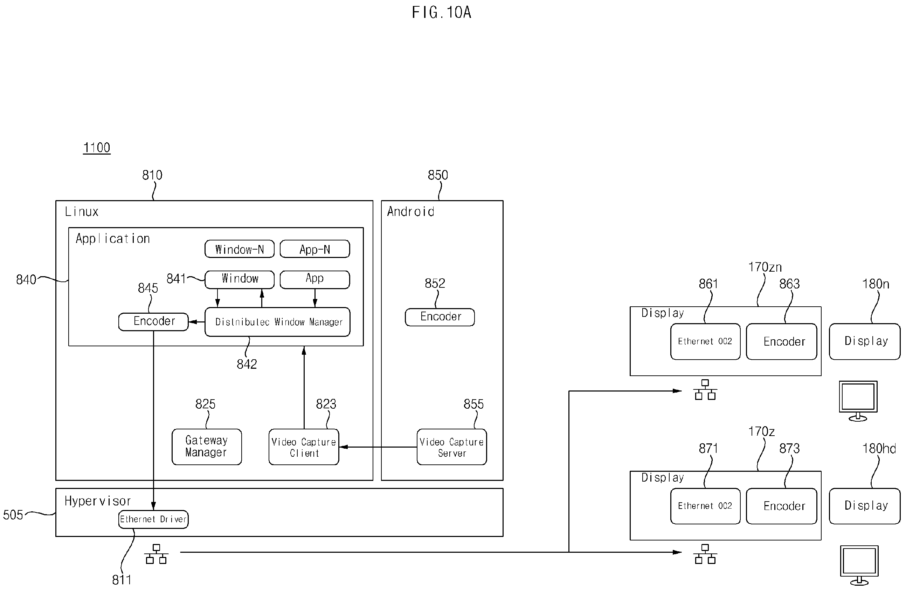

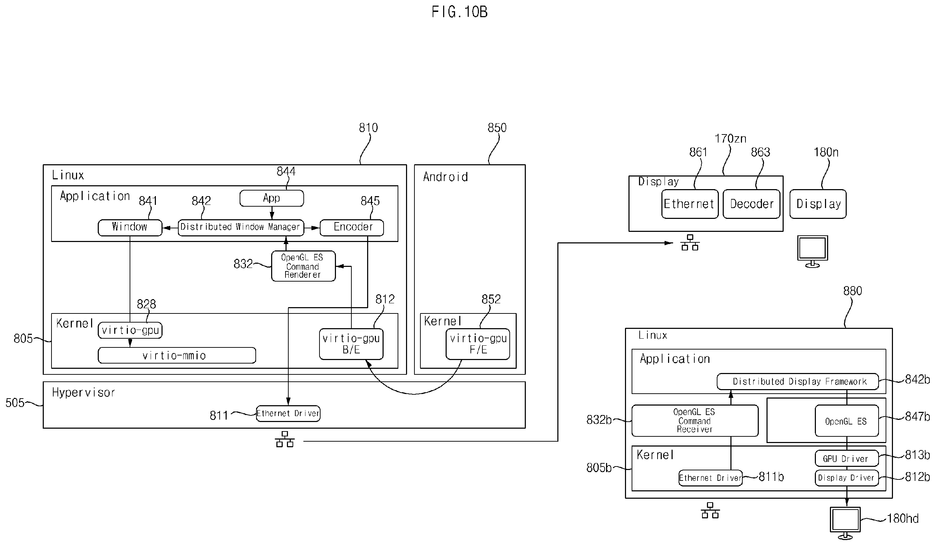

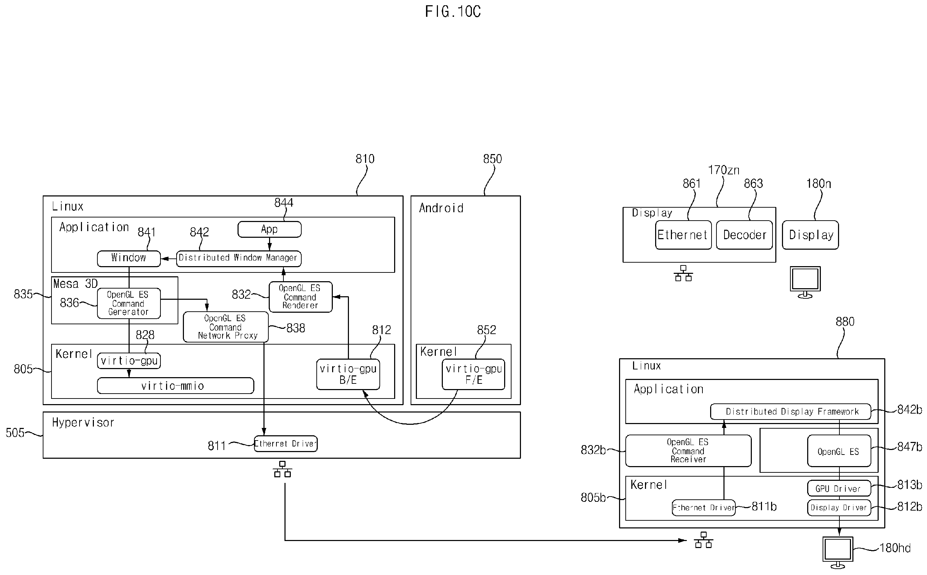

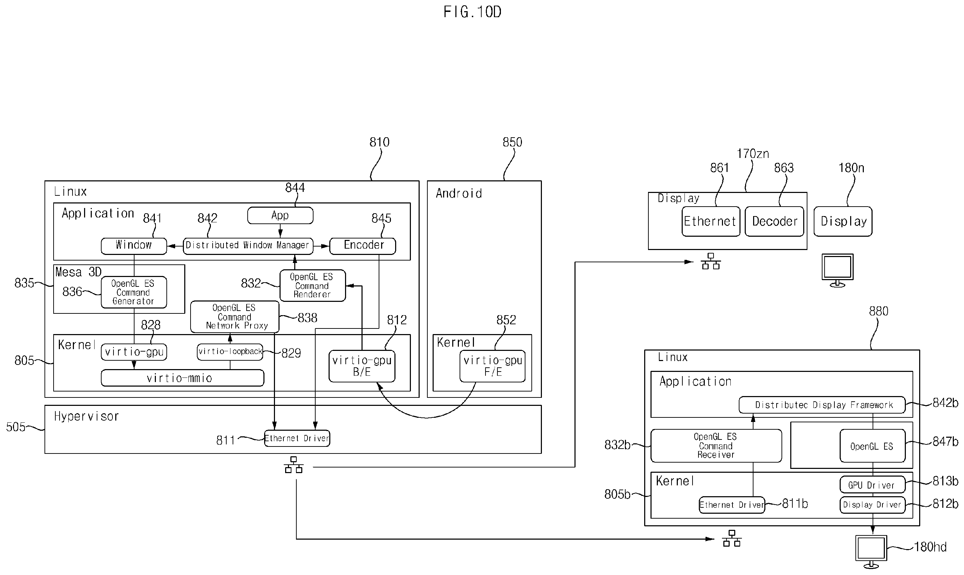

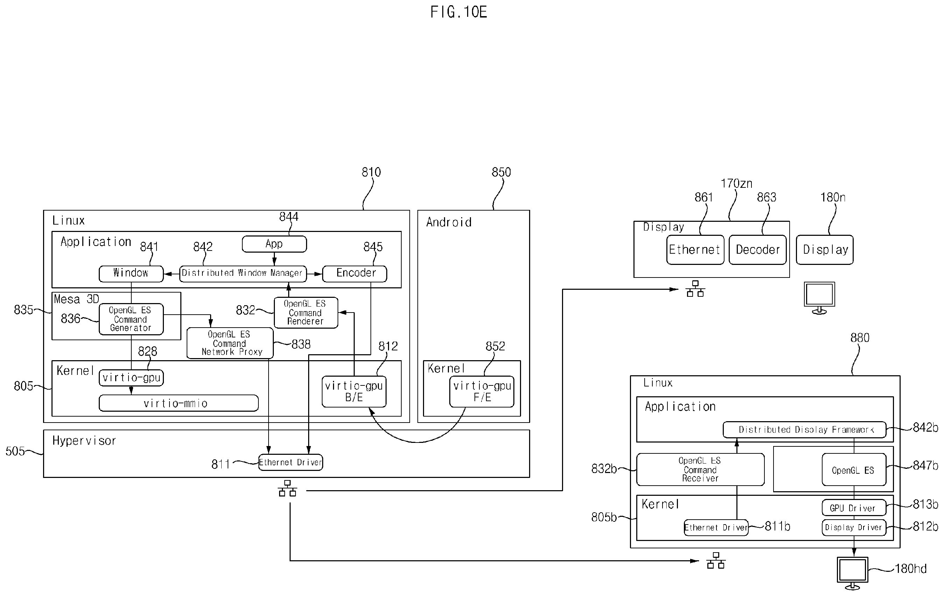

The processor 175 can execute the first to third virtual machines (not shown) on the hypervisor 505 (see FIG. 10) in the processor 175.

Among the first to third virtual machines (not shown) (see FIG. 10), the first virtual machine (not shown) can be called a server virtual machine, and the second and third virtual machines (not shown) and (not shown) can be called guest virtual machines.

For example, the first virtual machine (not shown) in the processor 175 can receive sensor data from the plurality of sensor devices, such as vehicle sensor data, position information data, camera image data, audio data, or touch input data, and can process and output the received sensor data.

As described above, the first virtual machine (not shown) can process most of the data, whereby 1:N data sharing can be achieved.

In another example, the first virtual machine (not shown) can directly receive and process CAN data, Ethernet data, audio data, radio data, USB data, and wireless communication data for the second and third virtual machines (not shown).

Further, the first virtual machine (not shown) can transmit the processed data to the second and third virtual machines (not shown).

Accordingly, only the first virtual machine (not shown), among the first to third virtual machines (not shown), can receive sensor data from the plurality of sensor devices, communication data, or external input data, and can perform signal processing, whereby load in signal processing by the other virtual machines can be reduced and 1:N data communication can be achieved, and therefore synchronization at the time of data sharing can be achieved.

Meanwhile, the first virtual machine (not shown) can be configured to write data in the shared memory 508, whereby the second virtual machine (not shown) and the third virtual machine (not shown) share the same data.

For example, the first virtual machine (not shown) can be configured to write vehicle sensor data, the position information data, the camera image data, or the touch input data in the shared memory 508, whereby the second virtual machine (not shown) and the third virtual machine (not shown) share the same data. Consequently, 1:N data sharing can be achieved.

Eventually, the first virtual machine (not shown) can process most of the data, whereby 1:N data sharing can be achieved.

Meanwhile, the first virtual machine (not shown) in the processor 175 can be configured to set the shared memory 508 based on the hypervisor 505 in order to transmit the same data to the second virtual machine (not shown) and the third virtual machine (not shown).

Meanwhile, the signal processing device 170 can process various signals, such as an audio signal, an image signal, and a data signal. To this end, the signal processing device 170 can be implemented in the form of a system on chip (SOC).

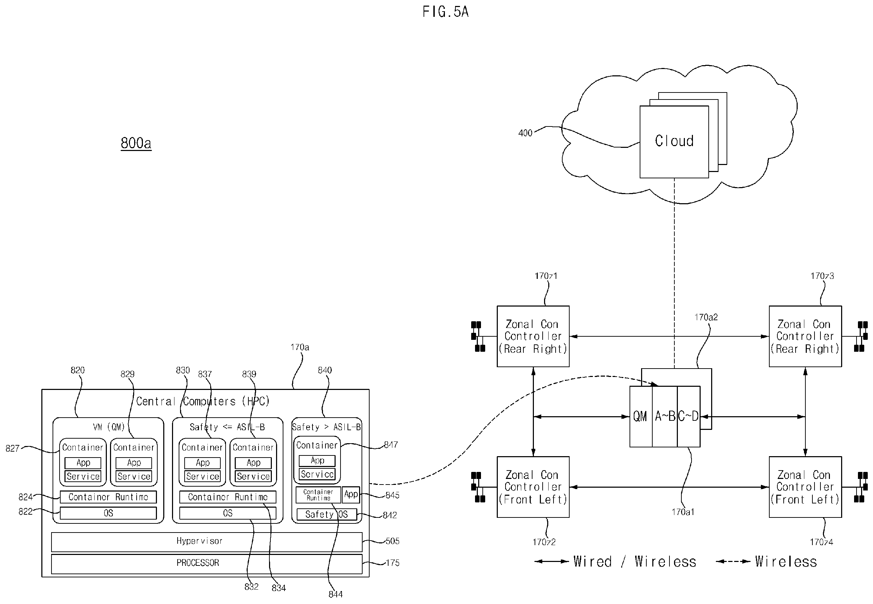

Meanwhile, the signal processing device 170 in the display apparatus 100 of FIG. 4 can be the same as signal processing devices 170, 170a1, and 170a2 of a vehicle display apparatus of FIG. 5A and subsequent drawings.

FIGS. 5A to 5D are diagrams illustrating various examples of a vehicle display apparatus.

FIG. 5A is a diagram illustrating an example of a vehicle display apparatus according to an embodiment of the present disclosure.

Referring to FIG. 5A, a vehicle display apparatus 800a according to an embodiment of the present disclosure includes signal processing devices 170a1 and 170a2 and a plurality of zonal signal processing devices 170Z1 to 170Z4.

Meanwhile, two signal processing devices 170a1 and 170a2 are illustrated in the drawing, which are provided for backup and the like, and one signal processing device is also possible.

Meanwhile, the signal processing devices 170a1 and 170a2 can be referred to as a High Performance Computing (HPC) signal processing devices.

The plurality of zonal signal processing devices 170Z1 to 170Z4 can be located in the respective zones Z1 to Z4 and can transmit sensor data to the signal processing devices 170a1 and 170a2.

The signal processing devices 170a1 and 170a2 can receive data by wire from the plurality of zonal signal processing devices 170Z1 to 170Z4 or a communication device 120.

In the drawing, an example is illustrated in which the signal processing devices 170a1 and 170a2 exchange data with the plurality of zonal signal processing devices 170Z1 to 170Z4 based on wired communication, and the signal processing devices 170a1 and 170a2 exchange data with the server 400 based on wireless communication, but the communication device 120 can exchange data with the server 400 based on wireless communication, and the signal processing devices 170a1 and 170a2 can exchange data with the communication device 120 based on wired communication.

Meanwhile, the data received by the signal processing devices 170a1 and 170a2 can include camera data or sensor data.

For example, the vehicle internal sensor data can include at least one of vehicle wheel speed data, vehicle direction data, vehicle location data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data, vehicle internal humidity data, external vehicle radar data or external vehicle lidar data.

Meanwhile, the camera data can include external vehicle camera data and vehicle internal camera data.

Meanwhile, the signal processing devices 170a1 and 170a2 can execute a plurality of virtual machines 820, 830, and 840 based on safety levels.

In the drawing, an example is illustrated in which the processor 175 in the signal processing device 170a is configured to execute the hypervisor 505, and is configured to execute first to third virtual machines 820 to 840 on the hypervisor 505 according to the Automotive Safety Integrity Level (ASIL).

The first virtual machine 820 can be a virtual machine corresponding to quality management (QM) which is the lowest risk level of the ASIL with no mandatory need.

The first virtual machine 820 can execute an operating system 822, a container runtime 824 on the operating system 822, and containers 827 and 829 on the container runtime 824.

The second virtual machine 820 can be a virtual machine corresponding to ASIL A or ASIL B with the combination of severity, exposure, and controllability values being 7 or 8.

The second virtual machine 820 can execute an operating system 832, a container runtime 834 on the operating system 832, and containers 837 and 839 on the container runtime 834.

The third virtual machine 840 can be a virtual machine corresponding to ASIL C or ASIL D with the combination of severity, exposure, and controllability values being 9 or 10.

Meanwhile, ASIL D can correspond to a grade that requires the highest level of safety.

The third virtual machine 840 can execute a safety operating system 842 and an application 845 on the operating system 842.

Meanwhile, the third virtual machine 840 can also execute the safety operating system 842, a container runtime 844 on the safety operating system 842, and a container 847 on the container runtime 844.

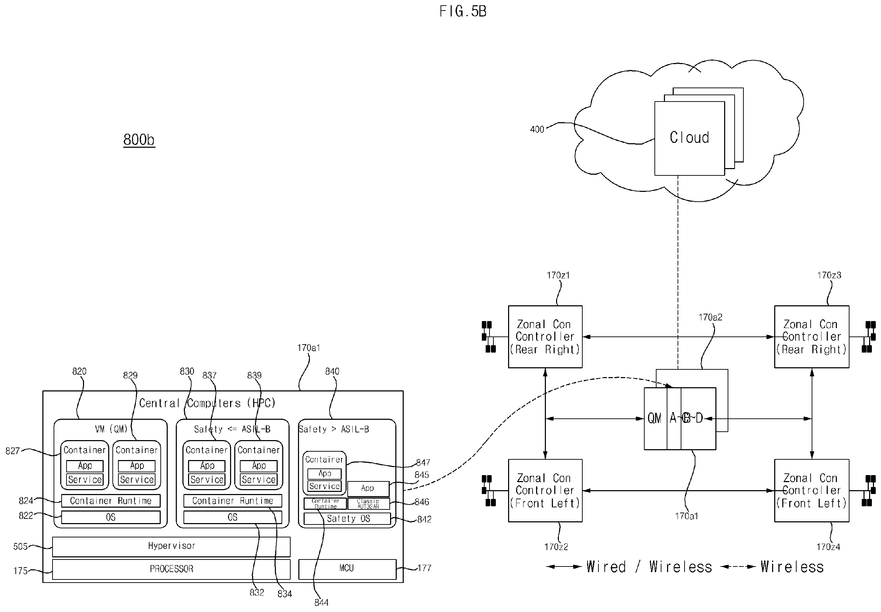

Meanwhile, unlike the drawing, the third virtual machine 840 can also be executed by a separate core, rather than by the processor 175, which will be described below with reference to FIG. 5B.

FIG. 5B is a diagram illustrating another example of a vehicle display apparatus according to an embodiment of the present disclosure.

Referring to FIG. 5B, a vehicle display apparatus 800b according to an embodiment of the present disclosure includes signal processing devices 170a1 and 170a2 and a plurality of zonal signal processing devices 170Z1 to 170Z4.

The vehicle display apparatus 800b of FIG. 5B is similar to the vehicle display apparatus 800a of FIG. 5A, with a difference being that the signal processing device 170a1 of FIG. 5B is partially different from the signal processing device 170a1 of FIG. 5A.

The following description will focus on the difference, in which the signal processing device 170a can include a processor 175 and a second processor 177.

The processor 175 in the signal processing device 170a1 is configured to execute the hypervisor 505, and execute the first and second virtual machines 820 and 830 on the hypervisor 505 according to the ASIL.

The first virtual machine 820 can execute the operating system 822, the container runtime 824 on the operating system 822, and the containers 827 and 829 on the container runtime 824.

The second virtual machine 820 can execute the operating system 832, the container runtime 834 on the operating system 832, and the containers 837 and 839 on the container runtime 834.

Meanwhile, the second processor 177 in the signal processing device 170a1 can execute the third virtual machine 840.

The third virtual machine 840 can execute the safety operating system 842, an AUTOSAR 845 on the operating system 842, and an application 845 on the AUTOSAR 845. That is, unlike FIG. 5A, the third virtual machine 840 can further execute the AUTOSAR 846 on the operating system 842.

Meanwhile, similarly to FIG. 5A, the third virtual machine 840 can also execute the safety operating system 842, the container runtime 844 on the safety operating system 842, and the container 847 on the container runtime 844.

Meanwhile, unlike the first and second virtual machines 820 and 830, the third virtual machine 840 that requires a high safety level is desirably executed by the second processor 177 that is a different core or a different processor.

Meanwhile, in the signal processing devices 170a1 and 170a2 of FIGS. 5A and 5B, if there is abnormality in the first signal processing device 170a, the second signal processing device 170a can operate which is provided for backup purposes.

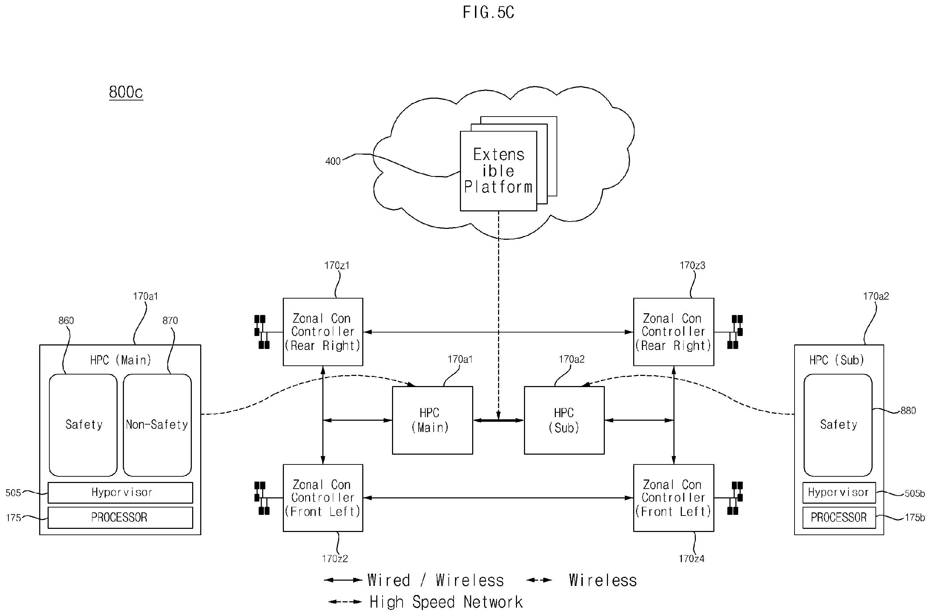

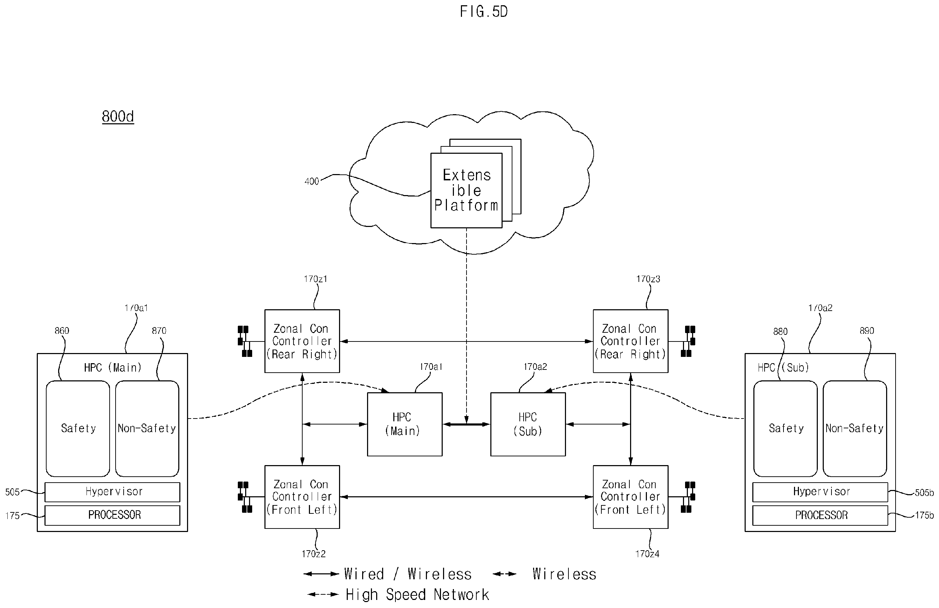

Unlike the example, the signal processing devices 170a1 and 170a2 can operate at the same time, among which the first signal processing device 170a can operate as a main device, and the second signal processing device 170a2 can operate as a sub device, which will be described below with reference to FIGS. 5C and 5D.

FIG. 5C is a diagram illustrating yet another example of a vehicle display apparatus according to an embodiment of the present disclosure.

Referring to FIG. 5C, a vehicle display apparatus 800c according to an embodiment of the present disclosure includes signal processing devices 170a1 and 170a2 and a plurality of zonal signal processing devices 170Z1 to 170Z4.

Meanwhile, two signal processing devices 170a1 and 170a2 are illustrated in the drawing, which are provided for backup and the like, and one signal processing device is also possible.

Meanwhile, the signal processing devices 170a1 and 170a2 can be referred to as a High Performance Computing (HPC) signal processing devices.

The plurality of zonal signal processing devices 170Z1 to 170Z4 can be located in the respective zones Z1 to Z4 and can transmit sensor data to the signal processing devices 170a1 and 170a2.

The signal processing devices 170a1 and 170a2 can receive data by wire from the plurality of zonal signal processing devices 170Z1 to 170Z4 or a communication device 120.

In the drawing, an example is illustrated in which the signal processing devices 170a1 and 170a2 exchange data with the plurality of zonal signal processing devices 170Z1 to 170Z4 based on wired communication, and the signal processing devices 170a1 and 170a2 exchange data with the server 400 based on wireless communication, but the communication device 120 can exchange data with the server 400 based on wireless communication, and the signal processing devices 170a1 and 170a2 exchange data with the communication device 120 based on wired communication.

Meanwhile, the data received by the signal processing devices 170a1 and 170a2 can include camera data or sensor data.

Meanwhile, the processor 175 in the first signal processing device 170a1 of the signal processing devices 170a1 and 170a2 can execute the hypervisor 505, and can execute each of a safety virtual machine 860 and a non-safety virtual machine 870 on the hypervisor 505.

Meanwhile, the processor 175b in the second signal processing device 170a2 of the signal processing devices 170a1 and 170a2 can execute the hypervisor 505b, and can execute only a safety virtual machine 880 on the hypervisor 505.

In the method, safety and non-safety virtual machines can be processed separately by the first signal processing device 170a1 and the second signal processing device 170a2, thereby improving stability and processing speed.

Meanwhile, high-speed network communication can be performed between the first signal processing device 170a1 and the second signal processing device 170a2.

FIG. 5D is a diagram illustrating yet another example of a vehicle display apparatus according to an embodiment of the present disclosure.

Referring to FIG. 5D, a vehicle display apparatus 800d according to an embodiment of the present disclosure includes signal processing devices 170a1 and 170a2 and a plurality of zonal signal processing devices 170Z1 to 170Z4.

The vehicle display apparatus 800d of FIG. 5D is similar to the vehicle display apparatus 800c of FIG. 5C, with a difference being that the second signal processing device 170a2 of FIG. 5D is partially different from the second signal processing device 170a2 of FIG. 5C.

The processor 175b in the second signal processing device 170a2 of FIG. 5D can execute the hypervisor 505b, and can execute each of a safety virtual machine 880 and a non-safety virtual machine 890 on the hypervisor 505.

That is, unlike FIG. 5C, there is a difference in that the processor 175b in the second signal processing device 170a2 is further configured to execute the non-safety virtual machine 890.

In the method, safety and non-safety virtual machines can be processed separately by the first signal processing device 170a1 and the second signal processing device 170a2, thereby improving stability and processing speed.

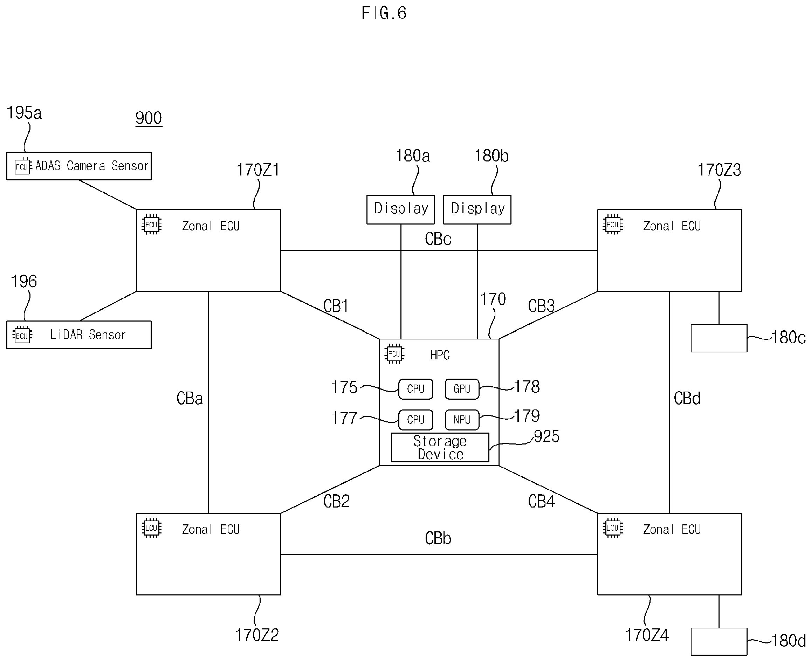

FIG. 6 is an exemplary block diagram of a vehicle display apparatus according to an embodiment of the present disclosure.

Referring to FIG. 6, a vehicle display apparatus 900 according to an embodiment of the present disclosure includes the signal processing device 170 and at least one display.

In the drawing, as the at least one display, a cluster display 180a, an AVN display 180b, and a network display 180c and 180d are illustrated.

Meanwhile, the cluster display 180a and the AVN display 180b can be connected to display ports.

Meanwhile, the network displays 180c and 180d can be connected to an in-vehicle network through network ports. Here, the network can be an Ethernet network based on Ethernet communication.

Although the network displays 180c and 180d are connected to a third zonal signal processing device 170Z3 and a fourth zonal signal processing device 170Z4 in the drawing, they can be connected to other zonal signal processing devices or directly to the signal processing device 170.

Meanwhile, the vehicle display apparatus 900 can further include the plurality of zonal signal processing devices 170Z1 to 170Z4.

In this case, the signal processing device 170 is a high-performance centralized signal processing and control device including a plurality of CPUs 175, GPUs 178, NPUs 179, etc., and can be referred to as a High Performance Computing (HPC) signal processing device or a central signal processing device.

The plurality of zonal signal processing devices 170Z1 to 170Z4 and the signal processing device 170 can be connected via wired cables CB1 to CB4.

Meanwhile, the plurality of zonal signal processing devices 170Z1 to 170Z4 can be connected via wired cables CBa to CBd.

In this case, the wired cables CBa to CBd can include CAN communication cable or Ethernet communication cable, or PCI Express cable.

Meanwhile, the signal processing device 170 according to an embodiment of the present disclosure can include at least one processor 175, 178, and 177, and a storage device 925 having a large capacity.

For example, the signal processing device 170 according to an embodiment of the present disclosure can include central processors 175 and 177, a graphic processor 178, and a neural processor 179.

Meanwhile, sensor data can be transmitted from at least one of the plurality of zonal signal processing devices 170Z1 to 170Z4 to the signal processing device 170. Particularly, the sensor data can be stored in the storage device 925 in the signal processing device 170.

In this case, the sensor data can include at least one of camera data, lidar data, radar data, vehicle direction data, vehicle position data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data or vehicle internal humidity data.

In the drawing, an example is illustrated in which the camera data from the camera 195a and the lidar data from the lidar sensor 196 are input to a first zonal signal processing device 170Z1, and the camera data and the lidar data are transmitted to the signal processing device 170 via a second zonal signal processing device 170Z2 and a third zonal signal processing device 170Z3, and the like.

Meanwhile, data write speed or data read speed to write and read data to and from the storage device 925 is faster than a network speed when the sensor data is transmitted from at least one of the plurality of zonal signal processing devices 170Z1 to 170Z4 to the signal processing device 170, such that it is preferred to perform multi path routing so as to avoid bottlenecks in a network.

To this end, the signal processing device 170 according to an embodiment of the present disclosure can perform multi path routing based on Software Defined Network (SDN). Accordingly, stable network environment for data write and read operations can be ensured. Further, data can be transmitted to the storage device 925 by using multiple paths, such that data can be transmitted by dynamically changing a network configuration.

It is desirable that data communication between the plurality of zonal signal processing devices 170Z1 to 170Z4 and the signal processing device 170 in the vehicle display apparatus 900 according to an embodiment of the present disclosure is peripheral component interconnect express communication in order to provide high band and low delay communication.

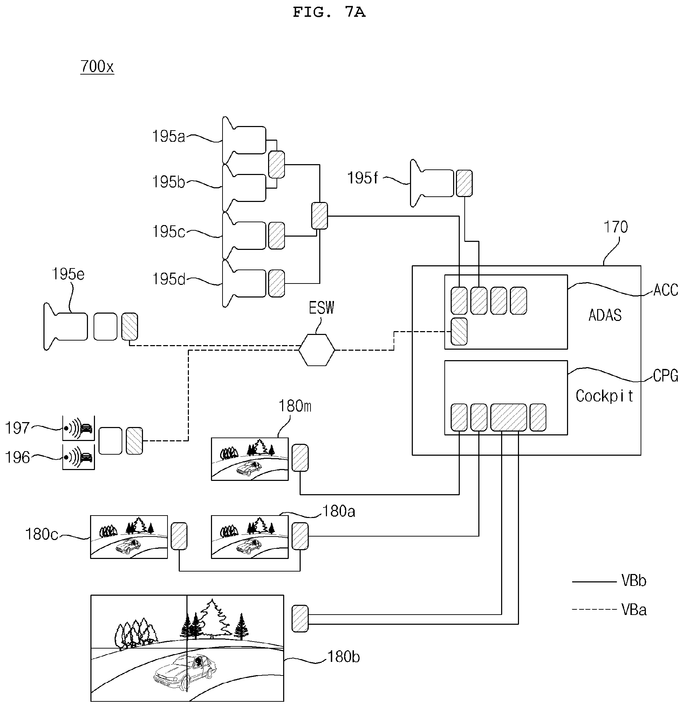

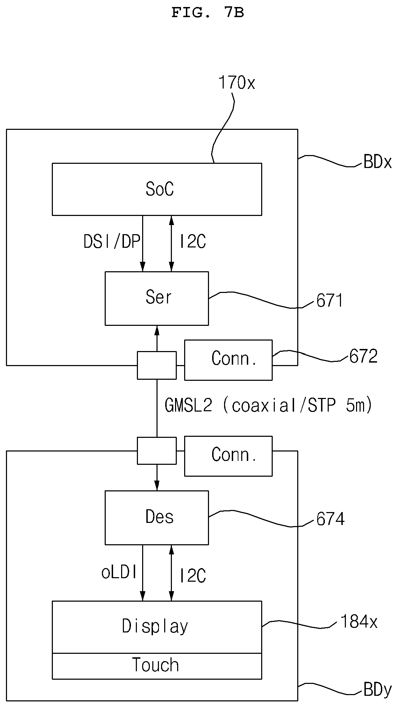

FIGS. 7A and 7B are diagrams referred to in the description of a signal processing device related to the present disclosure.

FIG. 7A illustrates a display apparatus including the signal processing device related to the present disclosure.

Referring to the drawings, a signal processing device 170x related to the present disclosure can be configured to execute or include an ADAS processor ACC and a cockpit processor CPG.

To this end, the signal processing device 170x receives camera data from a plurality of cameras 195a to 195d and 195f through SerDes communication VBb.

The signal processing device 170x receives camera data from some cameras 195e and sensor data from a lidar 197 or a radar 196 through Ethernet communication VBa.

The signal processing device 170x is configured to transmit image signals a plurality of displays 180a to 180c and 180m through SerDes communication VBb.

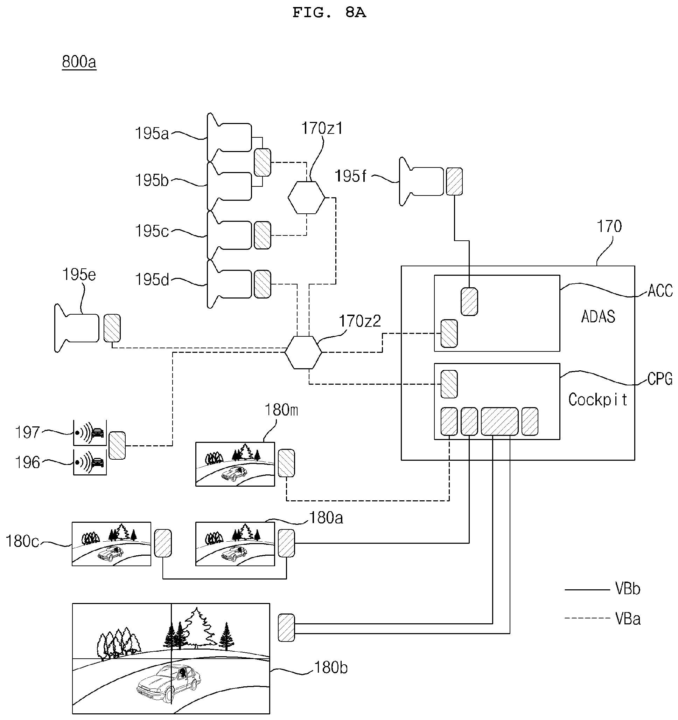

FIG. 7B is a diagram illustrating the SerDes communication of FIG. 8A.

Referring to the drawing, the signal processing device 170x in a first circuit board BDx can be configured to transmit a serially converted signal to a second circuit board BDy via a connector 672 through a SerDes communication module 671.

The SerDes communication module 674 in the second circuit board BDy can convert an input serial signal into a parallel signal and transmit the converted signal to a display 184X through a communication method such as I2C.

In the case of SerDes communication, as the number of displays increases or the resolution increases, a bandwidth and the like are limited, and thus it is difficult to transmit relative image signals.

Furthermore, SerDes communication has a problem that it is difficult to transmit image signals to additional displays.

Therefore, the present disclosure proposes a method of transmitting image signals to a display via Ethernet communication in addition to SerDes communication. This will be described with reference to FIG. 8A below.

FIG. 8A illustrates an example of a signal processing device according to an embodiment of the present disclosure.

Referring to the drawing, a signal processing device 170 in a vehicle display apparatus 800a according to an embodiment of the present disclosure can be configured to execute or include an ADAS processor ACC that receives camera data and performs signal processing, and a cockpit processor CPG that outputs an image signal.

To this end, the signal processing device 170 includes a processor 175 that receives camera data and performs signal processing or outputs an image signal.

For example, the ADAS processor ACC or the cockpit processor CPG that outputs an image signal can be executed within the processor 175.

Meanwhile, the signal processing device 170 receives camera data from a plurality of cameras 195a to 195e through Ethernet communication VBa.

For example, the signal processing device 170 can be configured to receive camera data from some 195a to 195c of the plurality of cameras 195a to 195e via a first zonal signal processing device 170Z1 through Ethernet communication VBa.

The signal processing device 170 can be configured to receive camera data from other some cameras 195d and 195e among the plurality of cameras 195a to 195e via a second zonal signal processing device 170Z2 through Ethernet communication VBa.

The signal processing device 170 can be configured to receive camera data from a certain camera 195f through SerDes communication VBb.

The signal processing device 170 can be configured to receive sensor data from a rider 197 or a radar 196 through Ethernet communication VBa via the second zonal signal processing device 170Z2.

The signal processing device 170 is configured to transmit image signals to the plurality of displays 180a to 180c through SerDes communication VBb.

The signal processing device 170 is configured to transmit an image signal to the display 180m connected to a network port through Ethernet communication VBa.

At this time, the processor 175 in the signal processing device 170 controls transmission of data related to graphic image or video data to the display 180m in consideration of the Ethernet communication network status.

For example, the processor 175 can be configured to transmit data related to graphic image when transmission of the data related to graphic image to the display 180m is possible, and transmit video data when transmission of data related to graphic image to the display 180m is impossible. Accordingly, images can be stably displayed on the network display 180m.

As another example, the processor 175 can be configured to transmit image data to the display 180m when transmission of the video data is possible, and transmit data related to graphic image to the display 180m when transmission of video data is not possible. Accordingly, images can be stably displayed on the network display 180m.

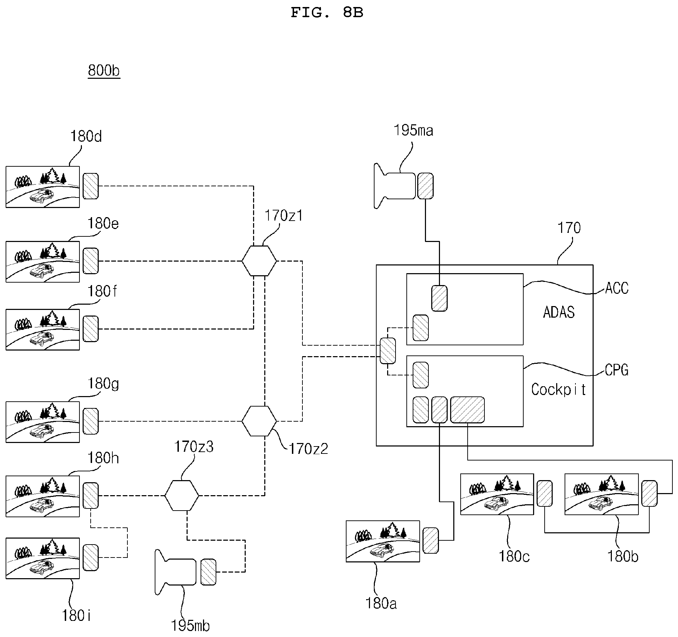

FIG. 8B illustrates another example of a signal processing device according to an embodiment of the present disclosure.

Referring to the drawing, the signal processing device 170 in a vehicle display apparatus 800b according to the embodiment of the present disclosure can execute or include an ADAS processor ACC that receives camera data and performs signal processing, and a cockpit processor CPG that outputs an image signal.

For example, the processor 175 in the signal processing device 170 can execute the ADAS processor ACC or the cockpit processor CPG that outputs an image signal.

The signal processing device 170 can be configured to transmit image signals to a plurality of network displays 180d to 180i through Ethernet communication VBa.

For example, the signal processing device 170 can transmit image signals to some 180d to 1805f of the plurality of network displays 180d to 180i via a first zonal signal processing device 170Z1 through Ethernet communication (VBa).

The signal processing device 170 can be configured to receive camera data from a certain camera 195mb via a third zonal signal processing device 170Z3 and a second zonal signal processing device 170Z2 through Ethernet communication VBa.

The signal processing device 170 can be configured to receive camera data from another camera 195ma through SerDes communication VBb.

The signal processing device 170 is configured to transmit image signals to a plurality of displays 180a to 180c through SerDes communication VBb.

The signal processing device 170 can be configured to transmit data related to graphic image or image data to a plurality of network displays 180d to 180i connected to an Ethernet network port. Accordingly, images can be stably displayed on the network displays.

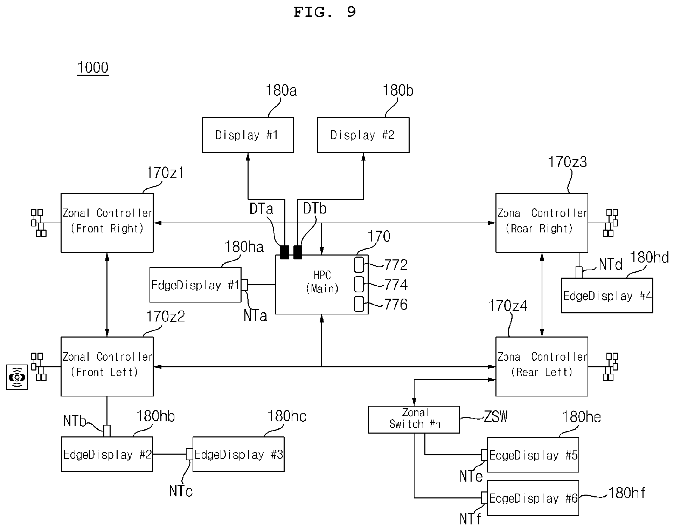

FIG. 9 is a block diagram illustrating another example of a vehicle display apparatus according to an embodiment of the present disclosure.

Referring to the drawing, a vehicle display apparatus 1100 according to an embodiment of the present disclosure includes a signal processing device 170 and at least one display 180ha connected to a network port NTa.

The vehicle display apparatus 1100 can further include a plurality of zonal signal processing devices 170z1 to 170z4.

The signal processing device 170 includes a processor (175 in FIG. 6) that controls the at least one display 180ha connected to the network port NTa.

The processor 175 is configured to transmit data related to graphic image or image data to the display 180ha.

In particular, the processor 175 can be configured to transmit data related to graphic image or image data to the display 180ha through Ethernet communication.

For example, the processor 175 can be configured to transmit data related to graphic image to the display 180ha if transmission of the data related to graphic image is possible and transmit image data to the display 180ha if transmission of the data related to graphic image is impossible. Accordingly, images can be stably displayed on the network display 180ha.

As another example, the processor 175 can be configured to transmit image data to the display 180ha if transmission of the image data is possible and transmit data related to graphic image to the display 180ha if transmission of the image data is impossible. Accordingly, images can be stably displayed on the network display 180ha.

Meanwhile, data related to graphic image can include graphic variable data and drawing command data.

Transmitted graphic variable data can include address information data in a memory of the signal processing device 170 indicated by pointer data.

The signal processing device 170 can be configured to synchronize a memory corresponding to the processor 175 and a memory corresponding to the display 180ha when the graphic variable data includes the pointer data.

The signal processing device 170 can be configured to transmit data regarding the difference between previous data and current data stored in the memory corresponding to the processor 175 to the memory corresponding to the display 180ha.

When a first address area in the memory indicated by first pointer data overlaps at least partially with a second address area in the memory indicated previously synchronized second pointer data during memory synchronization, the signal processing device 170 can be configured to generate third pointer data corresponding to a third address area including the overlapping area, the first address area, and the second address area, and transmit data related to graphic image including the generated third pointer data.

The signal processing device 170 can be configured to transmit image data to a cluster display 180a connected to a display port DTa without transmitting data related to graphic image. Accordingly, it is possible to stably display an image on the cluster display 180a that does not support Ethernet communication.

The signal processing device 170 can be configured to transmit image data to an AVN display 180b connected to the display port DTa without transmitting data related to graphic image. Accordingly, it is possible to stably display an image on the AVN display 180b that does not support Ethernet communication.

Meanwhile, the drawing illustrates a network display connected to each zone in addition to the first network display 180ha that is directly connected to the signal processing device 170.

A second network display 180hb and a third network display 180hc can be connected to the signal processing device 170 via a second zonal signal processing device 170z2.

A fourth network display 180hd can be connected to the signal processing device 170 via a third zonal signal processing device 170z3.

A fifth network display 180he and a sixth network display 180hf can be connected to the signal processing device 170 via the third zonal signal processing device 170z3.

Meanwhile, the processor 175 in the signal processing device 170 can include a gateway manager 772 that performs network management for at least one display 180ha to 180hf connected to the network, and a window manager 774 that manages settings for images displayed on at least one display 180ha to 180hf.

For example, the gateway manager 772 can assign a network address of at least one display 180ha to 180hf connected to the network.

In addition, the gateway manager 772 can assign a new network address when a new network display is added.

The window manager 774 can be configured to set the size or resolution of data related to graphic image or image data on the basis of the resolution or size of at least one display 180ha to 180hf connected to the network.

For example, when the first network display 180ha and the second network display 180hb connected to the network have different resolutions or sizes, the window manager 774 can be configured to differentiate the size or resolution of data related to graphic image or image. Accordingly, it is possible to stably display images suitable for the network displays.

Meanwhile, the processor 175 in the signal processing device 170 can further include a virtual display generator 776 that is configured to generate content corresponding to a network display.

In particular, the virtual display generator 776 can be configured to generate content corresponding to the characteristics of a network display.

Meanwhile, the processor 170 in the signal processing device 170 can be configured to execute a hypervisor (505 in FIG. 10A) and execute a plurality of virtual machines (810 and 850 in FIG. 10A) on the hypervisor. This will be described with reference to FIG. 10A below.

FIGS. 10A to 11 are diagrams referred to in the description of FIG. 9.

First, FIG. 10A is a diagram illustrating an example of transmission of image data.

Referring to the drawing, the processor 175 in the signal processing device 170 can be configured to execute the virtual machines 810 and 850 on the hypervisor 505.

Meanwhile, among the plurality of virtual machines 810 and 850, a first virtual machine 810 can be configured to transmit data related to graphic image or image data to the display 180hd.

In the drawing, the first virtual machine 810 is configured to transmit image data to the display 180hd as an example.

Meanwhile, the first virtual machine 810 can be configured to execute a gateway manager 825 that performs network management for the display 180hd connected to the network, and a window manager 842 that manages settings for images displayed on the display 180hd.

The first virtual machine 810 can be configured to transmit data related to graphic image or image data to a plurality of displays 180hd and 180n when the plurality of displays 180hd and 180n are connected to the network.

The drawing illustrates that the first virtual machine 810 is configured to transmit image data to each of the plurality of displays 180hd and 180n.

Meanwhile, the second virtual machine 850 among the plurality of virtual machines can be configured to transmit image source data to the first virtual machine 810, and the first virtual machine 810 can be configured to transmit data related to graphic image or image data based on the image source data to the display 180hd.

When the second display 180n in the drawing is additionally connected, the first virtual machine 810 can be configured to receive information on the second display 180n additionally connected to the network, and transmit graphic image related data or image data to the second display 180n.

In particular, the gateway manager 825 in the first virtual machine 810 can be configured to recognize the added second display 180n and transmit settings of the recognized second display 180n to the window manager 842 in the first virtual machine 810.

The window manager 842 can be configured to generate a virtual window for the second display 180n, and request and receive applications or data required for content creation from a cloud, etc.

The window manager 842 can be configured to compress and transmit image data for the second display 180n.

Meanwhile, the first virtual machine 810 can be configured to transmit data related to graphic image or image data having different sizes or resolutions to the display 180hd and the second display 180n when the display 180hd and the second display 180n have different resolutions. Accordingly, it is possible to stably display an image on the network display 180hd.

Meanwhile, the image data in FIG. 10A can be a captured image.

The second virtual machine 850 can be configured to execute an encoder 852 and a video capture server 855, and the video capture server 855 in the second virtual machine 850 can be configured to transmit captured image data to the first virtual machine 810.

In response, a video capture client 823 in the first virtual machine 810 receives the captured image data, and the window manager 842 in an application 840 in the first virtual machine 810 can output image data corresponding to a window created for the first display 180hd or the second display 180n in a window generator 841.

Additionally, the encoder 845 in the first virtual machine 810 can compress image data and transmit the same to an Ethernet driver 811 in the hypervisor 505.

The Ethernet driver 811 within the hypervisor 505 can be configured to transmit compressed image data to the first network display 180hd connected to the first zonal signal processing device 170z1 through Ethernet communication. Accordingly, the compressed image data can be stably transmitted to the first network display 180hd, and as a result, an image can be stably displayed on the first network display 180hd.

The Ethernet driver 811 within the hypervisor 505 can be configured to transmit compressed image data to the second network display 180n connected to an n-th zonal signal processing device 170zn through Ethernet communication. Accordingly, the compressed image data can be stably transmitted to the second network display 180n, and as a result, an image can be stably displayed on the second network display 180n.

The first virtual machine 810 can be configured to output separate second image data rather than data related to graphic image to the cluster display 180a connected to the display port DTa. Accordingly, it is possible to display an image stably on the cluster display 180a connected to the display port DTa.

The first virtual machine 810 can be configured to synchronize the memory corresponding to the processor 175 and the memory corresponding to the display 180hd when graphic variable data includes pointer data. Accordingly, it is possible to display an image stably on the network display 180hd.

The first virtual machine 810 can be configured to transmit data regarding the difference between previous data and current data stored in the memory corresponding to the processor 175 to the memory corresponding to the display 180hd. Accordingly, it is possible to display an image stably on the network display 180hd.

When a first address area in the memory indicated first pointer data overlaps at least partially with a second address area in the memory indicated by synchronized second pointer data during memory synchronization, the first virtual machine 810 can be configured to generate third pointer data corresponding to a third address area including the overlapping area, the first address area, and the second address area and transmit data related to graphic image including the generated third pointer data. Accordingly, it is possible to display an image stably on the network display 180hd.

The first virtual machine 810 can be configured to transmit data related to graphic image or image data to the display 180hd connected to a zonal signal processing device 170z. Accordingly, it is possible to display an image stably on the network display 180hd.

FIG. 10B is a diagram illustrating another example of image data transmission.

Referring to the drawing, a virtio-gpu front end 852 in the second virtual machine 850 can be configured to transmit image data to a virtio-gpu back end 812 in the first virtual machine 810.

A command renderer 832 in an application 844 in the first virtual machine 810 can be configured to transmit the received image data to the window manager 842.

The window manager 842 in the first virtual machine 810 can output image data corresponding to a window created for the first display 180hd or the second display 180n.

Next, the encoder 845 in the application 844 in the first virtual machine 810 can encode the image data output from the window manager 842 and transmit the same to the Ethernet driver 811 in the hypervisor 505.

The Ethernet driver 811 in the hypervisor 505 can be configured to transmit compressed image data to the second network display 180n connected to the n-th zonal signal processing device 170zn through Ethernet communication. Accordingly, the compressed image data can be stably transmitted to the second network display 180n, and as a result, an image can be stably displayed on the second network display 180n.

FIG. 10C is a diagram illustrating an example of transmission of data related to graphic image.

Referring to the drawing, the virtio-gpu front end 852 in the second virtual machine 850 can be configured to transmit image data to the virtio-gpu back end 812 in the first virtual machine 810.

The command renderer 832 in the application 844 in the first virtual machine 810 can be configured to transmit the received image data to the window manager 842.

The window manager 842 in the first virtual machine 810 can output image data corresponding to a window created for the first display 180hd or the second display 180n.

The image data output from the window manager 842 is input to a command generator 836 via the window 841, etc., and the command generator 836 can convert the image data into data related to graphic image.

At this time, the data related to graphic image can include graphic variable data and drawing command data.

The data related to graphic image output from the command generator 836 can be transmitted to the Ethernet driver 811 in the hypervisor 505 via a command network proxy within the first virtual machine 810.

The Ethernet driver 811 in the hypervisor 505 can be configured to transmit the data related to graphic image to the first network display 180hd connected to the first zonal signal processing device 170z1 through Ethernet communication.

An Ethernet driver 811b and a command receiver 832b in the first network display 180hd receive the data related to graphic image, and convert the same into image data through a display framework 842b, openGL ES 847b, GPU driver 813b, and display driver 812b.

Accordingly, the data related to graphic image can be stably transmitted to the first network display 180hd, and as a result, an image can be stably displayed on the first network display 180hd.

FIG. 10D is a diagram showing that image data and data related to graphic image are transmitted respectively.

Referring to the drawing, the first virtual machine 810 can be configured to transmit image data to the second network display 180n as in FIG. 10B.

Accordingly, compressed image data can be stably transmitted to the second network display 180n, and as a result, an image can be stably displayed on the second network display 180n.

The first virtual machine 810 can be configured to transmit data related to graphic image to the first network display 180hd as in FIG. 10C.

Accordingly, the data related to graphic image can be stably transmitted to the first network display 180hd, and as a result, an image can be stably displayed on the first network display 180hd.

FIG. 10E is a diagram illustrating another example of transmission of data related to graphic image.

Referring to the drawing, the virtio-gpu front end 852 in the second virtual machine 850 can be configured to transmit image data to the virtio-gpu back end 812 in the first virtual machine 810.

The command renderer 832 in the application 844 in the first virtual machine 810 can be configured to transmit the received image data to the window manager 842.

The window manager 842 in the first virtual machine 810 can output image data corresponding to a window created for the first display 180hd or the second display 180n.

The image data output from the window manager 842 is input to the command generator 836 via the window 841, etc., and the command generator 836 can convert the image data into data related to graphic image.

The data related to graphic image output from the command generator 836 can be transmitted to the Ethernet driver 811 in the hypervisor 505 via the command network proxy in the first virtual machine 810.

The Ethernet driver 811 in the hypervisor 505 can be configured to transmit the data related to graphic image to the second network display 180n connected to the n-th zonal signal processing device 170zn through Ethernet communication.

Accordingly, the data related to graphic image can be stably transmitted to the second network display 180n, and as a result, an image can be stably displayed on the second network display 180n.

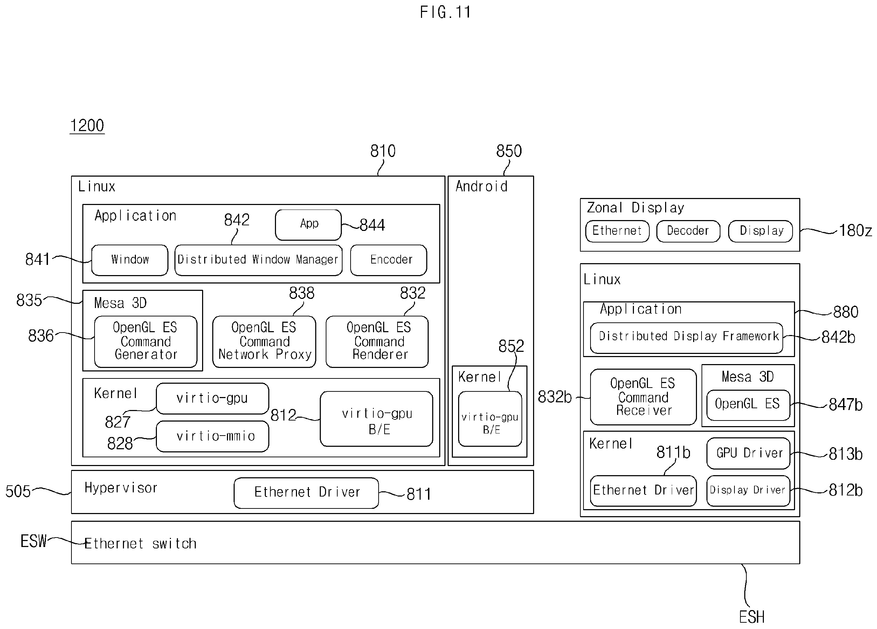

FIG. 11 is a block diagram illustrating another example of a vehicle display apparatus according to an embodiment of the present disclosure.

Referring to the drawing, a vehicle display apparatus 1200 according to an embodiment of the present disclosure can include the signal processing device 170 and a network display 180z.

The signal processing device 170 can be configured to execute a plurality of virtual machines 810 and 850.

The virtio-gpu front end 852 in the second virtual machine 850 can be configured to transmit image data to the virtio-gpu back end 812 in the first virtual machine 810.

The command renderer 832 in the application 844 in the first virtual machine 810 can be configured to transmit the received image data to the window manager 842.

The window manager 842 in the first virtual machine 810 can output image data corresponding to a window created for the network display 180z.

The image data output from the window manager 842 is input to the command generator 836 via the window 841, etc., and the command generator 836 can convert the image data into data related to graphic image.

The data related to graphic image output from the command generator 836 can be transmitted to the Ethernet driver 811 in the hypervisor 505 via a command network proxy 838 in the first virtual machine 810.

The Ethernet driver 811 in the hypervisor 505 can be configured to transmit data related to graphic image to the network display 180z connected to a network port via an Ethernet switch ESH through Ethernet communication.

The Ethernet driver 811b and the command receiver 832b in the network display 180z receive the data related to graphic image and convert the same into image data through the display framework 842b, openGL ES 847b, GPU driver 813b, and display driver 812b.

Accordingly, the data related to graphic image can be stably transmitted to the network display 180z, and as a result, an image can be stably displayed on the network display 180z.

It is also possible to transmit image data, instead of data related to graphic image, to the network display 180z.

For example, the virtio-gpu front end 852 in the second virtual machine 850 can transmit image data to the virtio-gpu back end 812 in the first virtual machine 810.

The command renderer 832 in the application 844 in the first virtual machine 810 can be configured to transmit the received image data to the window manager 842.

The window manager 842 in the first virtual machine 810 can output image data corresponding to a window created for the network display 180z.

Next, the encoder 845 in the first virtual machine 810 can encode the image data output from the window manager 842 and transmit the same to the Ethernet driver 811 in the hypervisor 505.

The Ethernet driver 811 in the hypervisor 505 can be configured to transmit compressed image data to the network display 180z connected to the network terminal through Ethernet communication.

Accordingly, the compressed image data can be stably transmitted to the network display 180z, and as a result, an image can be stably displayed on the network display 180z.

Meanwhile, the signal processing device 170 can be configured to transmit data related to graphic image to the network display 180z if transmission of the data related to graphic image is possible and transmit image data to the network display 180z if transmission of the data related to graphic image is impossible.

For example, the signal processing device 170 can determine whether the command receiver 832b of the network display 180z can execute the display framework 842b, openGL ES 847b, etc., and if it is possible, determine that transmission of data related to graphic image to the network display 180z is possible.

The signal processing device 170 can determine that transmission of data related to graphic image to the network display 180z is possible if the command receiver 832b of the network display 180z cannot execute the display framework 842b, openGL ES 847b, etc.

The signal processing device 170 can be configured to transmit image data to the network display 180z if transmission of the image data is possible and transmit data related to graphic image to the network display 180z if transmission of the image data is impossible. Accordingly, it is possible to display an image stably on the network display 180hd.

Meanwhile, the signal processing device 170 can check the network status during Ethernet communication, for example, the network bandwidth or the network speed, and if the bandwidth is equal to or greater than a reference value or the network speed is equal to or higher than a reference speed, determine that image data can be transmitted.

The signal processing device 170 can check the network status during Ethernet communication, for example, the network bandwidth or the network speed, and if the bandwidth is less than the reference value or the network speed is lower than the reference speed, determine that image data cannot be transmitted.

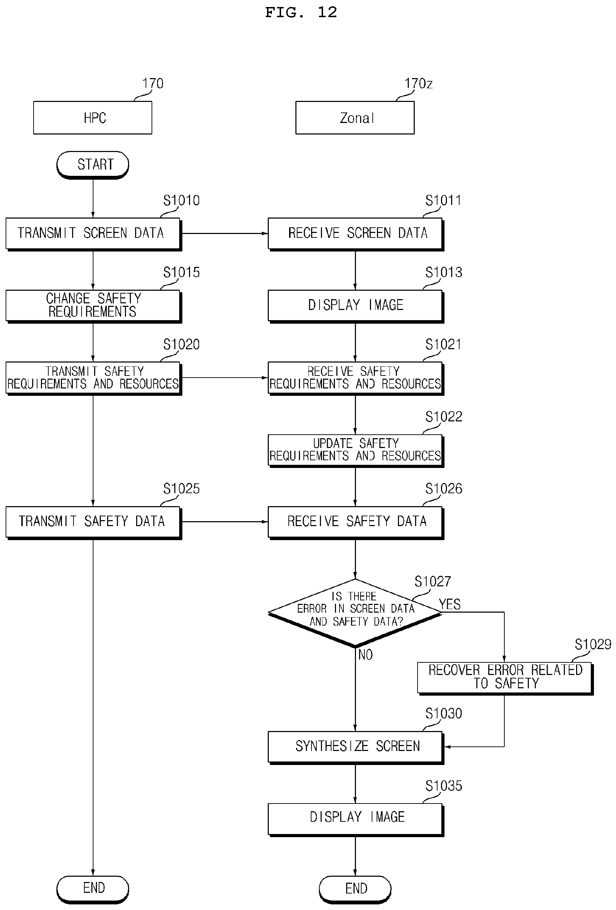

FIG. 12 is a flowchart illustrating an operation method of the vehicle display apparatus according to an embodiment of the present disclosure.

Referring to the drawing, the vehicle display apparatus according to an embodiment of the present disclosure can operate to ensure safety when safety requirement specifications displayed on a display are changed.

First, the signal processing device 170 is configured to transmit screen data for a network display connected to the zonal signal processing device 170z (S1010).

In response, the zonal signal processing device 170z receives the screen data (S1011), and the network display connected to the zonal signal processing device 170z displays an image based on the screen data (S1013).

The signal processing device 170 performs safety requirement change according to the safety requirement change (S1015), and is configured to transmit safety requirements and resources (S1020).

In response to this, the zonal signal processing device 170z receives the safety requirements and resources (S1021) and updates the safety requirements and resources.

Subsequently, the signal processing device 170 is configured to transmit safety data (S1025).

In response, the zonal signal processing device 170z receives the safety data (S1021) and monitors the screen data and the safety data to check whether there is an error (S1027).

If there is an error, the zonal signal processing device 170z recovers a safety-related error (S1029), synthesizes the screen data and the safety data (S1030), and displays the synthesized image on the network display (S1035).

Accordingly, the synthesized image without an error can be stably displayed on the network display.

The screen data can be transmitted according to the compressed image data transmission method described in FIGS. 10A to 10E, and the safety data can be transmitted according to the graphic image-related image data transmission method described in FIGS. 10A to 10E.

That is, the network display can also display data related to graphic image on compressed image data. Accordingly, it is possible to stably display safety data while stably displaying an image.

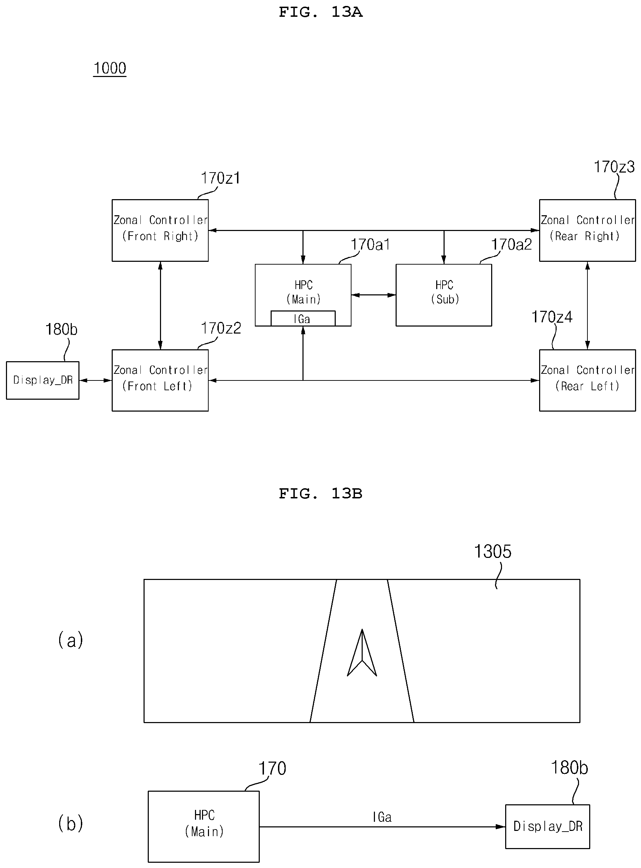

FIG. 13A is a diagram illustrating a vehicle display apparatus.

Referring to the drawing, the vehicle display apparatus 1000 can include a first central signal processing device 170a1, a second central signal processing device 170a2, first to fourth zonal signal processing devices 170z1 to 170z4, and a network display 180b.

In the drawing, the network display 180b is connected to the second zonal signal processing device 170z2.

The first central signal processing device 170a1 is configured to generate and transmit the screen data IGa in FIG. 12, and the network display 180b can be configured to receive the screen data via the second zonal signal processing device 170z2.

FIG. 13B illustrates a screen 1305 without safety data.

Referring to the drawing, the first central signal processing device 170a1 can be configured to transmit screen data IGa corresponding to the screen 1305 without safety data to the network display 180b via the second zonal signal processing device 170z2.

At this time, the screen data IGa without safety data can be transmitted according to any one of the compressed image data transmission method or the data related to graphic image transmission method described in FIGS. 10A to 10E.

Accordingly, the network display 180b can stably display the screen 1305 without safety data.

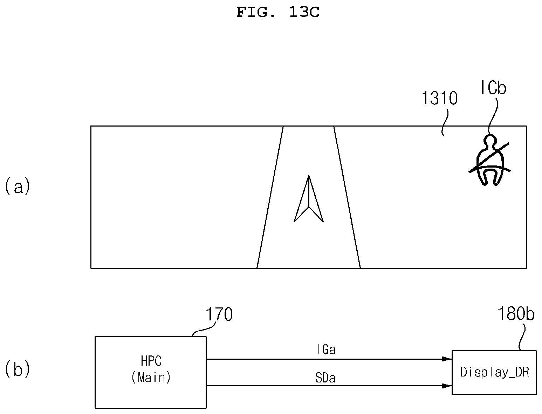

FIG. 13C illustrates a screen 1310 having safety data ICb added thereto.

Referring to the drawing, the safety data ICb can be data related to fastening a seat belt.

Referring to the drawing, the first central signal processing device 170a1 can be configured to transmit screen data IGa corresponding to the screen 1305 without safety data and the safety data ICb to the network display 180b via the second zonal signal processing device 170z2.

At this time, the screen data IGa without safety data can be transmitted according to any one of the compressed image data transmission method or the data related to graphic image transmission method described in FIGS. 10A to 10E.

The safety data ICb can be transmitted according to any one of the data related to graphic image transmission methods described in FIGS. 10A to 10E.

Accordingly, the network display 180b can stably display the screen 1310 having the safety data ICb added thereto by synthesizing the screen data IGa and the safety data ICb.

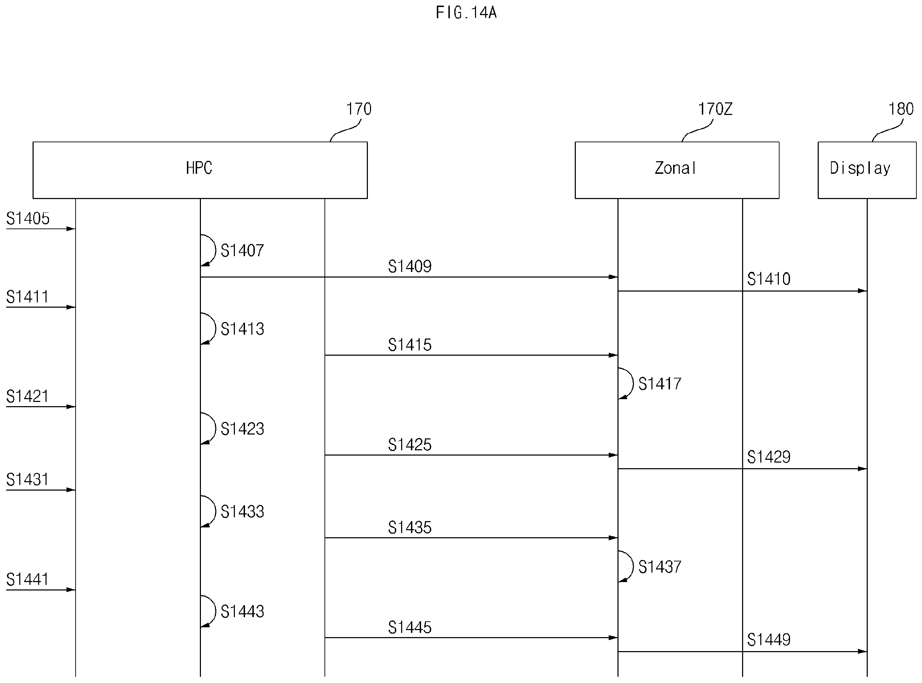

FIG. 14A is a flowchart illustrating safety data transmission and display.

Referring to the drawing, the signal processing device 170 starts an operation for displaying an image on the display 180 (S1405), is configured to generate a screen transmission request (S1407), and is configured to transmit screen data to the zonal signal processing device 170z (S1409).

In response, the zonal signal processing device 170z receives the screen data (S1409) and is configured to transmit the same to the network display 180 connected to the zonal signal processing device 170z (S1410). Accordingly, the network display 180 displays an image based on the screen data.

Subsequently, the signal processing device 170 receives a screen change request when a safety-related screen change is required (S1411), is configured to generate safety data corresponding to safety requirement change (S1413), and transmit the safety data to the zonal signal processing device 170z (S1415).

At this time, coordinate information, image information, and the like of the safety data can be transmitted to the zonal signal processing device 170z.

In response, the zonal signal processing device 170z can update safety requirements based on the safety data (S1417).

When a first safety condition occurs (S1421), the signal processing device 170 is configured to generate first safety condition information (S1423) and transmit first related data to the zonal signal processing device 170z (S1425).

In response, the zonal signal processing device 170z can perform monitoring while transmitting the first related data to the network display 180 (S1429).

Accordingly, the safety data based on the first related data can be stably displayed on the network display 180.

Next, when a second safety condition occurs (S1431), the signal processing device 170 is configured to generate second safety condition information (S1433) and transmit second related data to the zonal signal processing device 170z (S1435).

In response, the zonal signal processing device 170z can control error recovery to be performed when an error is identified while receiving and monitoring the second related data (S1437).

Next, when a third safety condition occurs (S1441), the signal processing device 170 is configured to generate third safety condition information (S1443) and is configured to transmit third related data to the zonal signal processing device 170z (S1445).

In response, the zonal signal processing device 170z can perform monitoring while transmitting the third related data to the network display 180 (S1449).

Accordingly, safety data based on the third related data can be stably displayed on the network display 180.

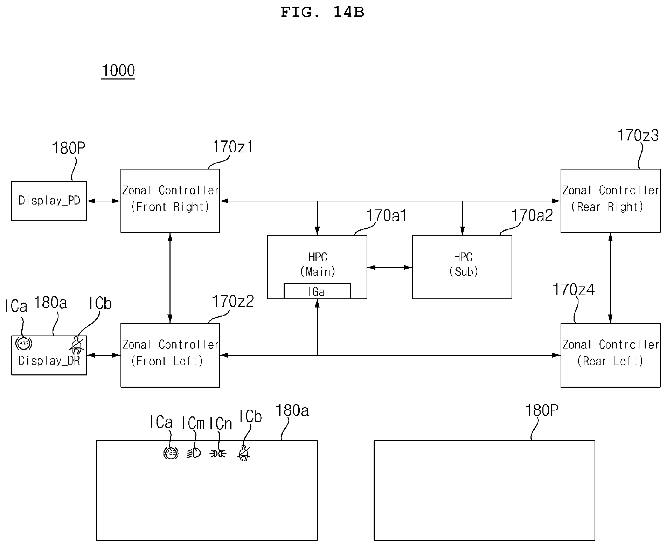

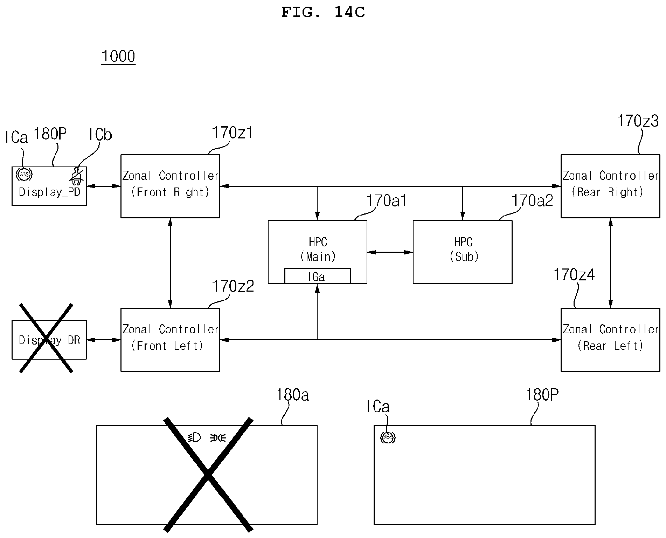

FIG. 14B and FIG. 14C are diagrams illustrating display of movement of safety data.

FIG. 14B illustrates that safety data is displayed on a cluster display 180a and no safety data is displayed on a passenger seat display 180P.

Referring to the drawing, the vehicle display apparatus 1000 can include central signal processing devices 170a and 170b, a plurality of zonal signal processing devices 170z1 to 170z4, the cluster display 180a, and the passenger seat display 180P.

The first central signal processing device 170a can be configured to transmit screen data IGa and safety data ICa, ICb, ICm, and ICbn to the cluster display 180a, which is a network display, via the second zonal signal processing device 170z2.

Accordingly, the cluster display 180a can display an image based on the screen data IGa and safety icons or the like based on the safety data ICa, ICb, ICm, and ICbn.

The safety icons or the like are not displayed on the passenger seat display 180P.

FIG. 14C illustrates an example in which at least some of the safety data is moved to the passenger seat display 180P.

Referring to the drawing, the first central signal processing device 170a can be configured to transmit at least some ICa and ICb of the safety data ICa, ICb, ICm, and ICbn to the passenger seat display 180P, which is a network display, via the first zonal signal processing device 170z1.

Accordingly, the at least some ICa and ICb of the data ICa, ICb, ICm, and ICbn can be displayed on the passenger seat display 180P.

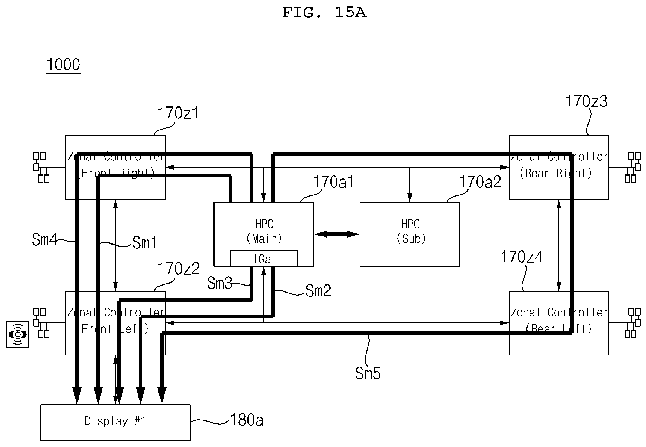

FIG. 15A is a diagram illustrating various examples of transmission of data related to graphic image.

Referring to the drawing, when safety levels are Sm1>Sm2>Sm3>Sm4>Sm5, the first central signal processing device 170a in the vehicle display apparatus 1000 can be configured to transmit graphic data Sm1 corresponding to a first safety level to the cluster display 180a via the first zonal signal processing device 170z1 and the second zonal signal processing device 170z2.

In addition, the first central signal processing device 170a can be configured to transmit graphic data Sm2 corresponding to a second safety level to the cluster display 180a via the second zonal signal processing device 170z2.

In addition, the first central signal processing device 170a can be configured to transmit graphic data Sm3 corresponding to a third safety level to the cluster display 180a via the second zonal signal processing device 170z2.

The first central signal processing device 170a can be configured to transmit graphic data Sm4 corresponding to a fourth safety level to the cluster display 180a via the first zonal signal processing device 170z1 and the second zonal signal processing device 170z2.

In addition, the first central signal processing device 170a can be configured to transmit graphic data Sm5 corresponding to a fifth safety level to the cluster display 180a via the third zonal signal processing device 170z3, the fourth zonal signal processing device 170z4, and the second zonal signal processing device 170z2.

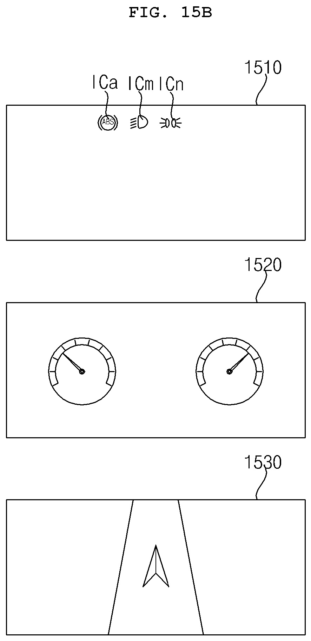

FIG. 15B illustrates graphic data displayed on a display in relation to FIG. 15A.

Referring to the drawing, the graphic data Sm1 corresponding to the first safety level and the graphic data Sm2 corresponding to the second safety level can be displayed on the cluster display 180a as safety graphics 1510.

The graphic data Sm3 corresponding to the third safety level can be displayed on the cluster display 180a as speed graphics 1520.

The graphic data Sm4 corresponding to the fourth safety level and the graphic data Sm5 corresponding to the fifth safety level can be displayed on the cluster display 180a as road graphics 1530.

The safety graphics 1510 can correspond to safety graphic data, the speed graphics 1520 can correspond to non-safety low-capacity graphic data, and the road graphics 1530 can correspond to non-safety large-capacity graphic data.

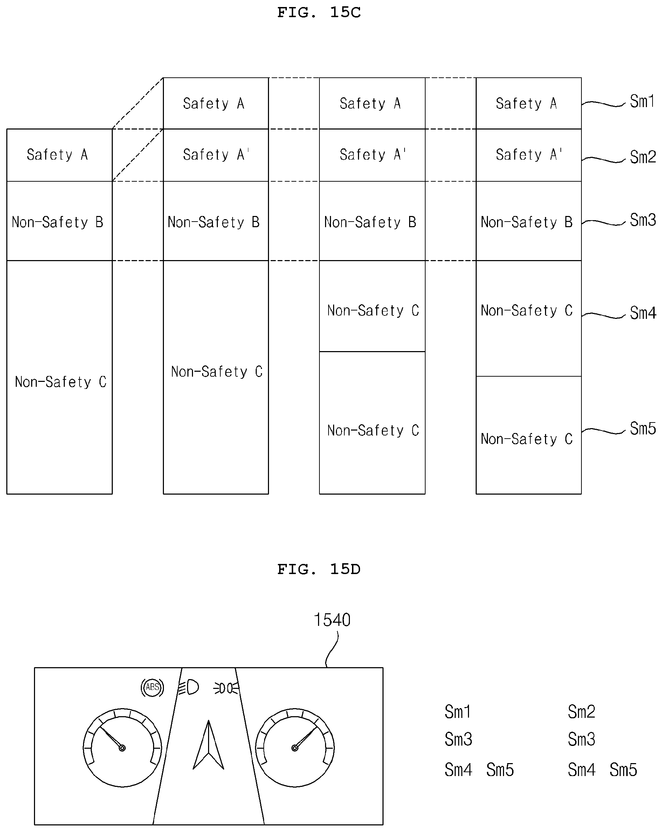

FIG. 15C is a diagram illustrating safety levels of a plurality of pieces of graphic data in FIGS. 15A and 15B.

Referring to the drawing, the graphic data Sm1 corresponding to the first safety level and the graphic data Sm2 corresponding to the second safety level can correspond to safety graphic data.

The graphic data Sm3 corresponding to the third safety level can correspond to non-safety low-capacity graphic data.

The graphic data Sm4 corresponding to the fourth safety level and the graphic data Sm5 corresponding to the fifth safety level can correspond to non-safety large-capacity graphic data.

FIG. 15D is a diagram illustrating combination of the first to fifth graphic data Sm1 to Sm5.

Referring to the drawing, the graphic data Sm3 corresponding to the third safety level can be disposed on the graphic data Sm4 corresponding to the fourth safety level and the graphic data Sm5 corresponding to the fifth safety level, and the graphic data Sm1 corresponding to the first safety level can be disposed on the graphic data Sm3 corresponding to the third safety level.

Alternatively, the graphic data Sm3 corresponding to the third safety level can be disposed on the graphic data Sm4 corresponding to the fourth safety level and the graphic data Sm5 corresponding to the fifth safety level, and the graphic data Sm2 corresponding to the second safety level can be disposed on the graphic data Sm3 corresponding to the third safety level.

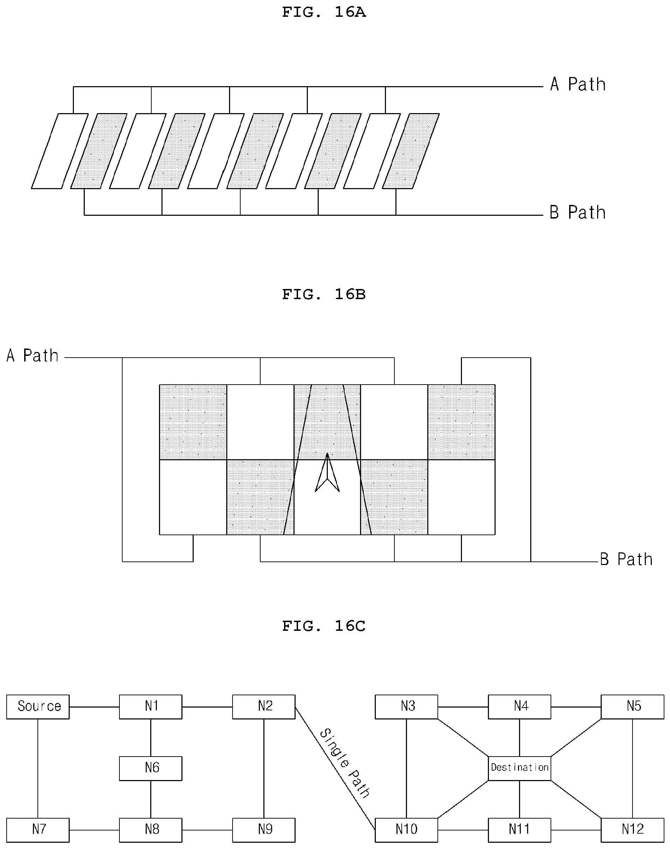

FIG. 16A to FIG. 16E are diagrams referred to in the description of data transmission in a safety zone and a non-safety zone.

FIG. 16A illustrates that among a plurality of pieces of frame data, odd-numbered frame data is transmitted through path A, and even-numbered frame data is transmitted through path B.

Referring to the drawing, the signal processing device 170 can separate the paths of odd-numbered frame data and even-numbered frame data when data related to graphic image or image data is transmitted.

FIG. 16B illustrates that one piece of frame data is divided into a plurality of areas, and paths are separated according to the bandwidth of each path, or the like.

Referring to the drawing, the signal processing device 170 can divide frame data into a plurality of areas, for example, a plurality of tile areas, and separate transmission paths for the divided areas when data related to graphic image or image data is transmitted.

FIG. 16C illustrates single-path transmission and multi-path transmission during data transmission.

Referring to the drawing, transmission is performed through multiple paths from a source to N2, transmission is performed through a single path from N2 to N10, and transmission is performed through multiple paths from N10 to a destination.

The signal processing device 170 can set an optimal path in consideration of bandwidth, speed, or the like during multi-path transmission, as shown in the drawing.

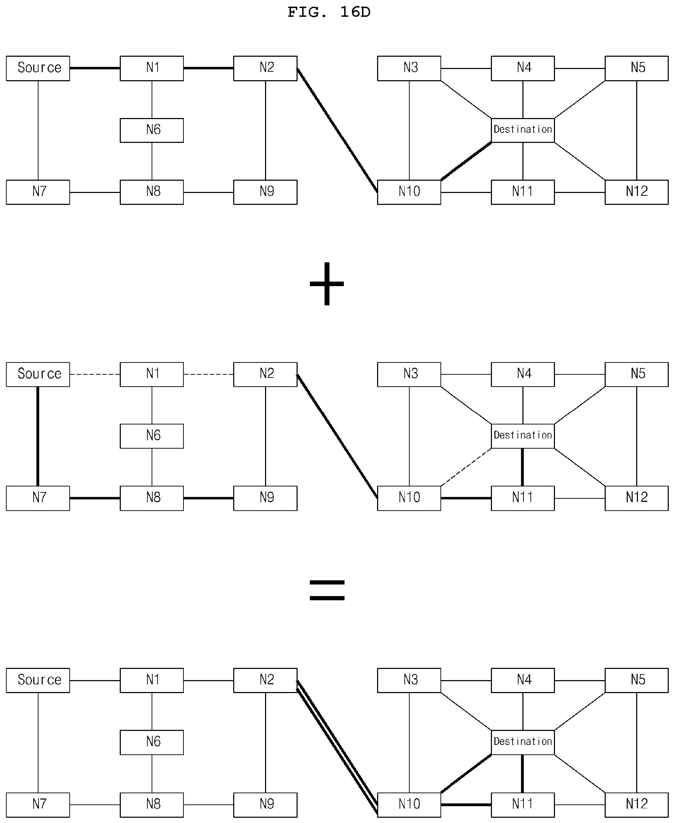

FIG. 16D is a diagram illustrating an example of multi-path selection.

Referring to the drawing, a first path can be a path from the source, N1, N2, N10, to the destination.

A second path can be a path from the source, N7, N8, N9, N2, N10, N11, to the destination.

A composite path can be a path that combines the first path and the second path.

The signal processing device 170 can synthesize the first path, the second path, etc., and transmit data related to graphic image or image data through the synthesized path. Accordingly, efficient data transmission can be performed.

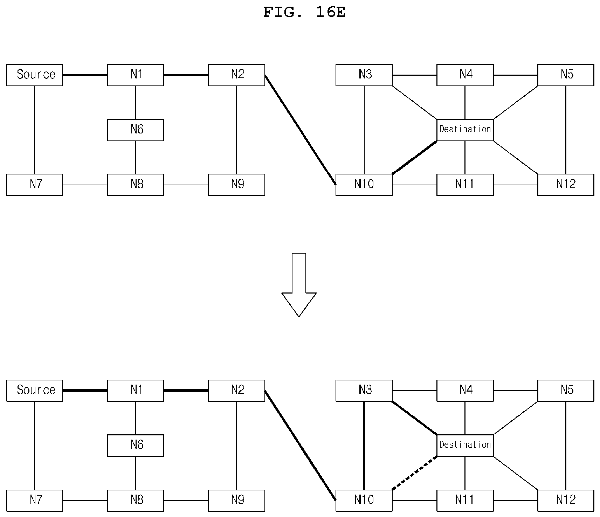

FIG. 16E is a diagram illustrating an example of path change.

Referring to the drawing, the first path can be a path from the source, N1, N2, N10, to the destination.

The second path can be a path from the source, N1, N2, N10, N3, to the destination.

In particular, when the bandwidth between N10 and the destination is less than a predetermined value or the speed is less than a predetermined speed on the first path, the path can be reset and a path from N10, N3, to the destination, like the second path, can be searched for and transmission is performed.

That is, the signal processing device 170 can be configured to transmit data related to graphic image or image data through the second path that has been reset in consideration of the bandwidth or speed during first path transmission. Accordingly, efficient data transmission can be performed.

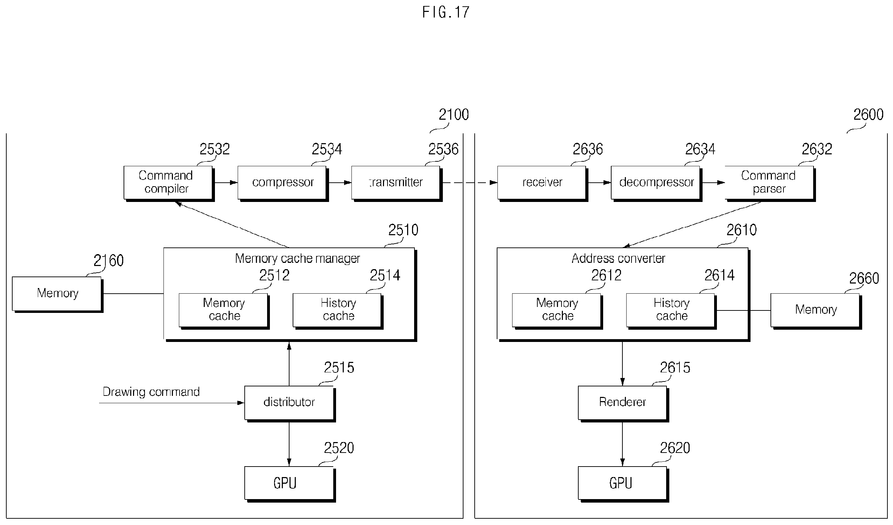

Transmission of data related to graphic image will be described with reference to FIG. 17 and following drawings.

A data transmission device 2100 shown in FIGS. 17 to 20D can be the signal processing device 170 described above, and a data reception device 2600 can be the network display 180.

FIG. 17 is an internal block diagram illustrating an example of a data transmission device and a data reception device that transmit data related to graphic image according to an embodiment of the present disclosure.

Referring to the drawing, the data transmission device 2100 of FIG. 17 can include a memory 2160, a memory cache manager 2510, a command distributor 2515, a graphic processor 2520, a compiler 2532, a compressor 2534, and a transmitter 2536.

When a user input signal is input through a user input unit (not shown) of the data transmission device 2100, a processor (not shown) can be configured to receive the user input signal and generate a drawing command to draw a graphic image.

Accordingly, the command distributor 2515 is configured to transmit the drawing command to the graphic processor 2520, and the graphic processor 2520 can be configured to generate the graphic image based on the drawing command. Then, the generated graphic image can be transmitted to a display (not shown) to be displayed.

When a user input signal is input in a state synchronized with the data reception device, the command distributor 2515 can be configured to transmit a drawing command to the memory cache manager 2510.

The memory cache manager 2510 configured to manage a memory can include a memory cache 2512 for managing graphic variable data in the memory 2160, and a history cache 2514 for managing history data in the memory 2160.

The memory cache 2512 can be configured to temporarily store graphic variable data according to the received drawing command and then record the graphic variable data in a predetermined address area within the memory. In particular, if the graphic variable data is pointer data, the memory cache 2512 can manage address area data within the memory.

The history cache 2514 can be configured to temporarily store history data for each object is and then store the history data in the memory when there is a plurality of objects in a graphic image to be drawn.

The memory cache manager 2510 can be configured to transmit received data related to graphic image and graphic variable data stored in the memory 2160 to the compiler 2532 for sharing a graphic image with the data reception device.

Although not shown in the figure, when the graphic processor 2520 is configured to generate the graphic image based on the drawing command, graphic variable data or history data stored in the memory 2160 can be used.

The compiler (command compiler) 2532 can synthesize graphic variable data and data related to graphic image. The synthesized data related to graphic image can be compressed by the compressor 2534 and transmitted to the data reception device 2600 through the transmitter 2536.

The data reception device 2600 of FIG. 17 can include a memory 2660, an address converter 2610, a renderer 2615, a graphic processor 2620, a parser 2632, a decompressor 2634, and a receiver (sender) 2636.

The receiver 2636 receives compressed data related to graphic image from the transmitter 2536. The decompressor 2634 decompresses the compressed data related to graphic image received from the transmitter 2536, and the parser (command parser) 2632 can extract graphic variable data and data related to graphic image from the decompressed data related to graphic image.

The extracted graphic variable data and data related to graphic image are transferred to the address converter 2610, and the data related to graphic image is transferred to the renderer 2615 for graphic display, and the graphic variable data is transferred to the memory 2660. Then, the graphic processor 2620 is configured to generate a graphic image based on the data related to graphic image and the graphic variable data. Then, the generated graphic image can be transmitted to and displayed on a display of an image display device.

Through this process, the data transmission device 2100 and the data reception device 2600 synchronized with each other can share the same graphic image. In particular, a graphic image with respect to a video can be shared in real time.

Here, in order to improve the efficiency of data transmission, data related to graphic image for generating a graphic image and graphic variable data, which are necessary to generate the graphic image, are transmitted instead of graphic image data itself, thereby enabling efficient data transmission.

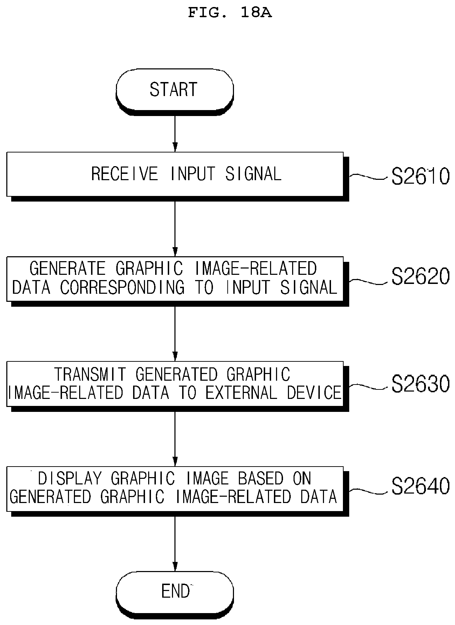

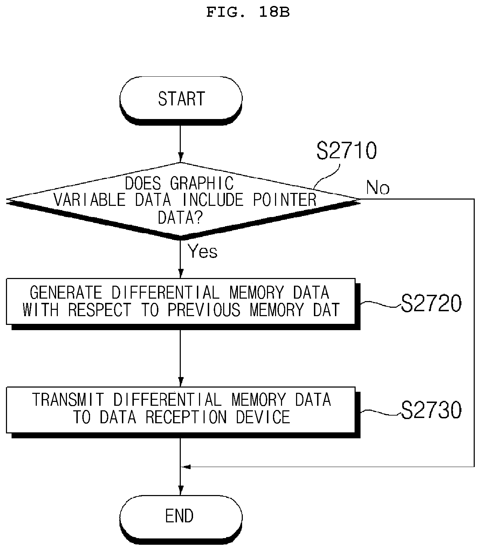

FIG. 18A is a flowchart illustrating an operation method of the data transmission device according to an embodiment of the present disclosure, and FIGS. 18B to 20D are diagrams referred to in description of various examples of the operation method of the data transmission device of FIG. 18A.

First, the data transmission device 2100 can be configured to receive an input signal (S2610).

For example, the data transmission device 2100 can receive a touch input as an example of a user input.

As another example, the data transmission device 2100 can receive various inputs such as a voice input, a key input, and a gesture input.

The received user input signal can be transmitted to a processor (not shown) in the data transmission device 2100.

Next, data related to graphic image corresponding to the input signal is generated (S2620).

The processor (not shown) in the data transmission device 2100 can be configured to generate the data related to graphic image corresponding to the user input signal.

For example, when there is a touch input, the processor (not shown) in the data transmission device 2100 can generate a graphic image in which a car moves to the left or right.

At this time, the graphic image can be generated in such a manner that the processor is configured to generate a drawing command to draw the graphic image in response to a user input signal and the graphic processor 2520 is configured to generate the graphic image using the generated drawing command and graphic variable data stored in the memory 2160.

Next, the generated data related to graphic image is transmitted to an external data reception device (S2630).

In order to share the graphic image, the memory cache manager 2510 can be configured to transmit the received data related to graphic image and the graphic variable data stored in the memory 2160 to the compiler 2532.

Then, the compiler (command compiler) 2532 can synthesize the graphic variable data and the data related to graphic image. The synthesized data related to graphic image can be compressed by the compressor 2534 and transmitted to the data reception device 2600 through the transmitter 2536.

Next, the graphic image corresponding to the generated data related to graphic image is displayed (S2640).

The data transmission device 2100 can display the graphic image processed by the graphic processor 2520 corresponding to the generated data related to graphic image on a display (not shown).

The data reception device 2600 can display a graphic image processed in the graphic processor 2620 corresponding to the received data related to graphic image on a display.

Accordingly, graphic image sharing between the two devices can be simply performed. Furthermore, the graphic image can be shared in real time.

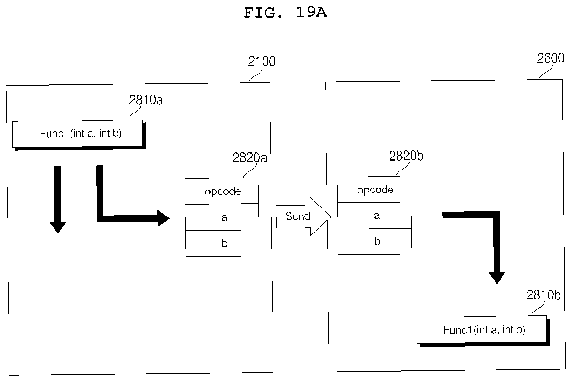

FIG. 19A illustrates an example in which data related to graphic image 2820a including data related to graphic image and graphic variable data is transmitted from the data transmission device 2100 to the data reception device 2600.

Here, the data related to graphic image can be data (opcode data) corresponding to a function 'Func1()', and the graphic variable data can be data corresponding to variables 'a' and 'b'.

The graphic processor 2520 can perform a drawing function 2810a using the data related to graphic image and the graphic variable data.

The data reception device 2600 can extract the data related to graphic image 'Func1()' and the graphic variable data 'a' and 'b' from the received data related to graphic image 2820b and use the same to perform a drawing function 2810b in the graphic processor 2620 within the image display device.

If the graphic variable data in the data related to graphic image is pointer data, the flowchart of FIG. 18B can be applied.

Referring to FIG. 18B, the processor of the data transmission device 2100 determines whether the graphic variable data includes pointer data (S2710), and if so, performs memory synchronization.

The processor of the data transmission device 2100 is configured to generate differential memory data, which is a difference between current memory data and previous memory data (S2720). Then, the transmitter 2536 of the data transmission device 2100 is configured to transmit differential memory data to the data reception device (S2730).

When the graphic variable data includes pointer data, the pointer data indicates data for the corresponding address area, not the current data stored in the memory, and thus memory synchronization between the data transmission device and the data reception device needs to be performed.

During memory synchronization, sharing all current memory data stored in the memory increases the amount of data to be transmitted, and thus it is preferable to transmit differential memory data, which is the difference between the previous memory data and the current memory data.

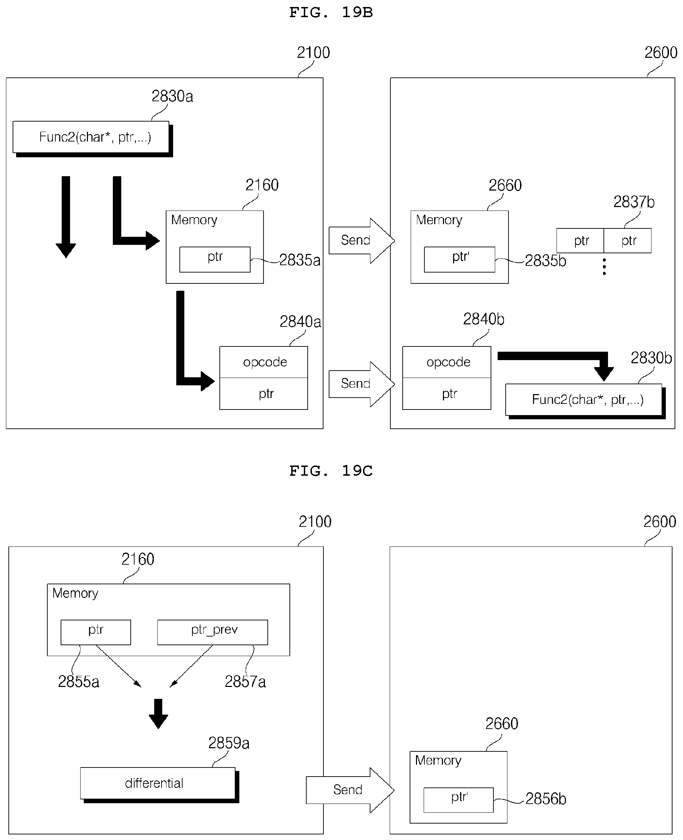

FIG. 19B illustrates that, when the graphic variable data includes pointer data 'ptr' indicating a predetermined address area 2835a in the memory 2160, synchronization between the memory 2160 of the data transmission device 2100 and the memory 2660 of the data reception device 2600 is performed, and then data related to graphic image 2840a including data related to graphic image and graphic variable data is transmitted from the data transmission device 2100 to the data reception device 2600.

Here, the data related to graphic image can be data (opcode data) corresponding to a function 'Func2()' and the graphic variable data can be data corresponding to variables 'char*' and 'ptr'.

Since the pointer data 'ptr' indicates the predetermined address area 2835a, the transmitted graphic variable data can be address information data of the predetermined address area 2835a. Accordingly, the data amount of the transmitted graphic variable data can be reduced.

The graphic processor 2520 can perform a drawing function 2830a using the data related to graphic image and the graphic variable data.

Memory synchronization can mean matching data values in each address area in the memory 2160 of the data transmission device 2100 with data values in each address area in the memory 2660 of the data reception device 2600.

In particular, the memory synchronization can mean matching data values in the address area 2835a indicated by the pointer data 'ptr' in the memory 2160 of the data transmission device 2100 with data values in the address area 2835b indicated by pointer data 'ptr" in the memory 2660 of the data reception device 2600.

In this memory synchronization, by transmitting the data values in the address area 2835a indicated by the pointer data 'ptr' before other graphic variable data, the accuracy of memory access by pointer data received thereafter is improved.

The data reception device 2600 extracts the data related to graphic image 'Func2()' and the graphic variable data 'char*' and 'ptr' from the received data related to graphic image 2840b after synchronizing the memory 2160 with the memory 2660 of the data transmission device 2100, and the graphic processor 2620 in the image display device can perform a drawing function 2830b using the extracted data.

The data reception device 2600 can be configured to generate pointer data 'ptr'' using the data values in the address area 2835a indicated by the pointer data 'ptr' received from the data transmission device 2100 and use the data values of the address area 2835b corresponding to the pointer data 'ptr''.

The data reception device 2600 can manage the pointer data 'ptr' from the data transmission device 2100 and the pointer data 'ptr'' generated by itself, or the data of the address area corresponding to the pointer data 'ptr' and the data of the address area corresponding to the pointer data 'ptr'' generated by itself within a hash table 2837.

As described with reference to FIG. 19B, in memory synchronization, in order to match the data values in the address area 2835a indicated by the pointer data 'ptr' in the memory 2160 of the data transmission device 2100 with the data values in the address area 2835b indicated by the pointer data 'ptr'' in the memory 2660 of the data reception device 2600, it is possible to transmit differential data, which is the difference between previous memory data and current memory data.

FIG. 19C illustrates transmission of differential data from a memory during memory synchronization.

Referring to FIG. 19C, the processor can calculate differential data 2859a, which is the difference between a data value of an address area 2857a corresponding to previous pointer data ptr_prev in the memory 2160 and a data value of an address area 2855a corresponding to current pointer data ptr in the memory 2160, and the transmitter 2536 can be configured to transmit the calculated differential data 2859a to the data reception device 2600. As a result, data transmission efficiency is improved during memory synchronization.

The data reception device 2600 can be configured to generate pointer data 'ptr'' corresponding to the differential data 2859a received from the data transmission device 2100 and use a data value of an address area 2856b corresponding to the pointer data 'ptr''.

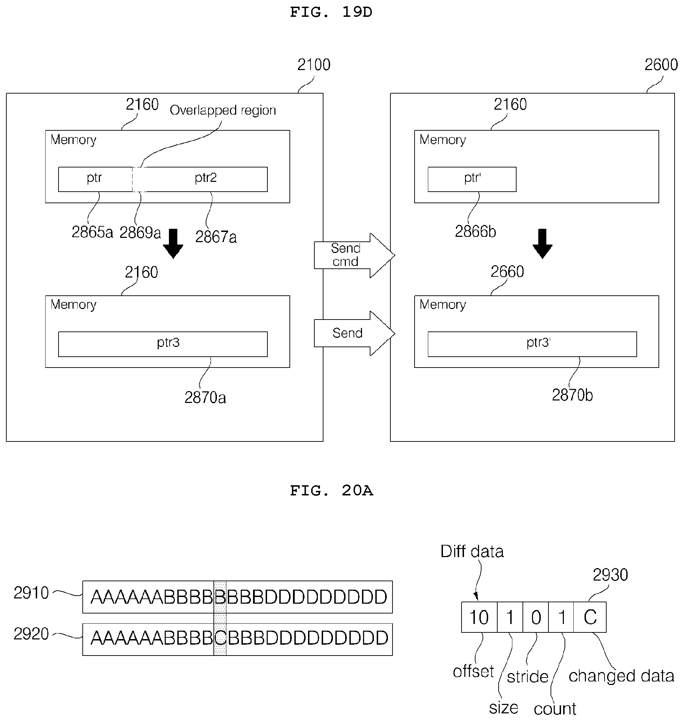

FIG. 19D illustrates a memory synchronization method in a case where address areas in a memory overlap by a plurality of pieces of pointer data during memory synchronization.

Referring to the drawing, when a first address area 2865a in the memory indicated by first pointer data ptr and a second address area 2867a in the previously synchronized memory indicated by second pointer data ptr2 overlap at least partially during memory synchronization, the processor can be configured to generate third pointer data ptr3 corresponding to a third address area 2870a including the overlapped region 2869a, the first address area 2865a, and the second address area 2867a.

In relation to the generation of the third pointer data, the processor can be configured to generate command data regarding pointer data generation for controlling the memory 2160.

The transmitter 2536 can be configured to transmit the command data regarding the generation of the third pointer data to the data reception device 2600.

That is, data related to graphic image transmitted to the data reception device 2600 can additionally include command data regarding memory control in addition to graphic variable data and graphic command data.

The command data regarding memory control is data for controlling the memory 2160 of the data transmission device 2100 or the memory 2600) of the data reception device 2160, and can include, deletion command data, differential command data (diff), xor operation command data, and historing command data in addition to generation command data.

The generation command data can include a memory start address, size, and variable data, the deletion command data can include a memory start address, the differential command data (diff) can include a memory start address, offset, size, and diff data, the xor operation command data can include a memory start address, offset, size, and xor data, and the historing command data can include a memory start address, offset, size, and history index.

Meanwhile, the transmitter 2536 can also transmit graphic variable data related to the generated third pointer data ptr3 to the data reception device 2600.

Since the third pointer data 'ptr3' indicates the predetermined address area 2870a, the transmitted graphic variable data from the transmitter 2536 can be address information data of the predetermined address area 2870a. Accordingly, the data amount of the transmitted graphic variable data can be reduced.

The data reception device 2600 can be configured to generate pointer data 'ptr3'' by using a data value in the address area 2870a indicated by the third pointer data ptr3 received from the data transmission device 2100, and can use a data value of an address area 2866b corresponding to the pointer data 'ptr3''**.**

In particular, the data reception device 2600 can improve the accuracy of memory synchronization by using the pointer data 'ptr3'' corresponding to the third pointer data ptr3 rather than pointer data 'ptr'' corresponding to the first pointer data ptr during memory synchronization.

FIGS. 20A to 20D are diagrams referred to describe various examples of memory synchronization techniques.

First, FIG. 20A illustrates an example of previous data 2910 and current data 2920 of a memory. The difference is represented as 'B' of the previous data and 'C' of the current data.

Accordingly, the processor can compare the previous data 2910 and the current data 2920 in units of int or byte, detect the difference, and attach a header to generate differential data. The header can include location information, size information, etc. of the portion where there is a difference. Since data often changes at a certain stride, the header can further include stride.

FIG. 20A illustrates an example of such differential data 2930.

The differential data 2930 can include location information (offset) indicating a location where no difference has occurred, the size of a portion where the difference has occurred or a consecutive number of times the difference has occurred, a stride at which the difference has occurred, a count of occurrence of the difference, and changed data according to the difference.

In the drawing, since the eleventh value 'B' has changed to 'C' in the previous data 2910 and the current data 2920, the differential data 2930 has an offset of '10', a size of '1', a stride of '1', a count of '1', and changed data of 'C'.

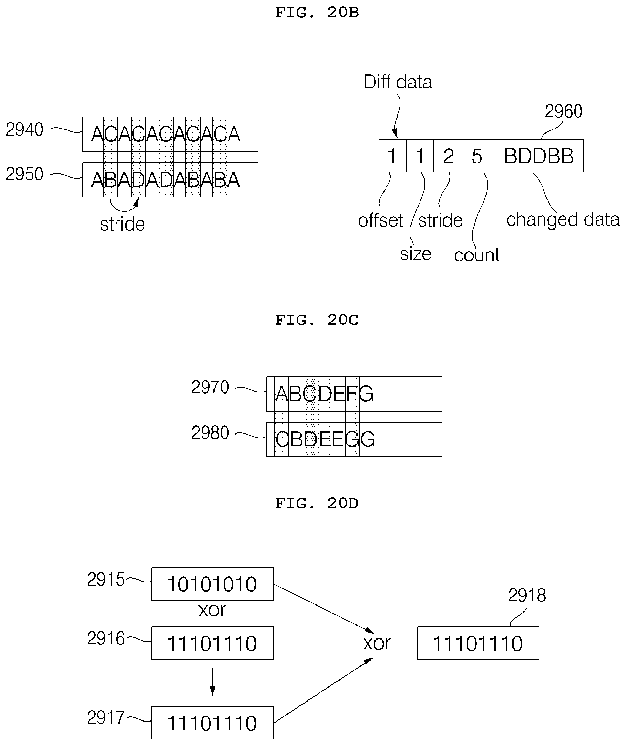

Next, FIG. 20B illustrates another example of previous data 2940 and current data 2950 of the memory. In the same manner as FIG. 20A, differential data 2960 has an offset of '1', a size of '1', a stride of '2', a count of '5', and changed data of 'BDDBB'.

As in FIG. 20A and FIG. 20B, when a difference is detected by comparing previous data with current data in units of int or byte units when generating differential data, the differential data can become larger than the original data. In such a case, an xor result value can be generated as differential data by using an xor operator.

FIG. 20C illustrates that previous data 2970 of the memory is 'ABCDEFG' and current data 2980 is 'CBDEEGG'.

As in FIG. 20A and FIG. 20B, if previous data is compared with current data in units of int or byte when generating differential data, differences such as shaded portions occur. Since the intervals of such differences are not constant, the differential data can eventually become larger than the original data.

In this case, it can be more effective to generate differential data using an xor operator.

FIG. 20D illustrates a method of generating differential data using the xor operator.

FIG. 20D illustrates that previous data 2915 of the memory is '10101010' and current data 2916 is '11101110'. When an xor operation is performed, the same bits are changed to 0, and thus the efficiency can be improved when a compression algorithm is applied later.

Accordingly, differential data 2917 according to the xor operation can be '11101110', and during data transmission, compressed data 2918 of '11101110' can be transmitted.

It will be apparent that, although the preferred embodiments have been shown and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. A signal processing device comprising a processor configured to control at least one display connected to a network port,
wherein the processor is configured to transmit data related to graphic image or image data to the display.

2. The signal processing device of claim 1, wherein the processor is configured to transmit the data related to graphic image to the display in response to transmission of the data related to graphic image being possible, and transmit the image data to the display in response to transmission of the data related to graphic image being impossible.

3. The signal processing device of claim 1, wherein the processor comprises:
a gateway manager configured to perform network management for the display connected to a network; and
a window manager configured to manage settings for images displayed on the display.

4. The signal processing device of claim 1, wherein the processor is configured to transmit the data related to graphic image or the image data to the display through Ethernet communication.

5. The signal processing device of claim 1, wherein the processor is configured to execute a plurality of virtual machines on a hypervisor,
wherein a first virtual machine among the plurality of virtual machines is configured to transmit the data related to graphic image or the image data to the display.

6. The signal processing device of claim 5, wherein the first virtual machine is configured to execute a gateway manager configured to perform network management for the display connected to the network, and a window manager configured to manage settings for images displayed on the display.

7. The signal processing device of claim 5, wherein the first virtual machine is configured to transmit the data related to graphic image or the image data to a plurality of displays in response to the plurality of displays being connected to the network.

8. The signal processing device of claim 5, wherein the first virtual machine controls is configured to output second image data to a cluster display connected to a display port.

9. The signal processing device of claim 5, wherein a second virtual machine among the plurality of virtual machines is configured to transmit image source data to the first virtual machine, and
wherein the first virtual machine is configured to transmit graphic image or the image data based on the image source data to the display.

10. The signal processing device of claim 5, wherein the first virtual machine is configured to receive information on a second display additionally connected to the network, and transmit the data related to graphic image or the image data to the second display.

11. The signal processing device of claim 10, wherein, in response to the display and the second display having different resolutions, the first virtual machine is configured to differentiate sizes or resolutions of the data related to graphic image or the image data transmitted to the display and the second display.

12. The signal processing device of claim 5, wherein the data related to graphic image includes graphic variable data and drawing command data.

13. The signal processing device of claim 12, wherein the transmitted graphic variable data includes address information data in a memory of the signal processing device indicated by pointer data.

14. The signal processing device of claim 12, wherein the first virtual machine is configured to synchronize a memory corresponding to the processor and a memory corresponding to the display in response to the graphic variable data including pointer data.

15. The signal processing device of claim 12, wherein the first virtual machine is configured to transmit differential data of previous data and current data stored in the memory corresponding to the processor to the memory corresponding to the display.

16. The signal processing device of claim 14, wherein, in response to a first address area in a memory indicated by first pointer data overlapping at least partly with a second address area in a previously synchronized memory indicated second pointer data during the memory synchronization, the first virtual machine is configured to generate third pointer data corresponding to a third address area including the overlapping area, the first address area, and the second address area, and transmit data related to graphic image including the generated third pointer data.

17. The signal processing device of claim 5, wherein the first virtual machine is configured to transmit data related to graphic image or image data to the display connected to a zonal signal processing device.

18. A signal processing device comprising a processor configured to control at least one display connected to a network port,
wherein the processor is configured to transmit data related to graphic image or image data to the display and output second image data to a cluster display connected to a display port.

19. A vehicle display apparatus comprising:
at least one display; and
a signal processing device configured to output an image signal to the display,
wherein the signal processing device comprises the signal processing device of claims 1 to 18.
